# EUROPEAN PATENT APPLICATION

(11) **EP 4 737 160 A1**
(43) Date of publication of application: **06.05.2026**
(21) Application number: 24829938.0
(22) Date of filing: 05.03.2024
(51) Int. Cl.: B60K 1/04

(54) **VEHICLE BODY AND VEHICLE**

(30) Priority: 30.06.2023 CN 202310802180
(71) Applicant: Contemporary Amperex Technology Co., Limited, Ningde, Fujian 352100 (CN)
(72) Inventor: CAO, Gen, Ningde, Fujian 352100 (CN); CHAN, Libing, Ningde, Fujian 352100 (CN)
(74) Representative: Ran, Handong
(86) International application number: PCT/CN2024/080170
(87) International publication number: WO 2025/001285

(57) **Abstract**

A vehicle body (1000) and a vehicle (10000). The vehicle body comprises a support assembly (100) and a plurality of first connectors (200), wherein a plurality of first mounting portions (300) are provided on the support assembly; each first mounting portion is configured for detachably connecting to one battery (2000); the number of first connectors is equal to the number of first mounting portions; and each first connector is configured for connecting to a second connector of one battery. The structure of the vehicle body can effectively reduce the battery swapping costs.

## Description

### CROSS-REFERENCE TO RELATED APPLICATIONS

This application claims priority to Chinese Patent Application No. 202310802180.4, filed on June 30, 2023 and entitled "VEHICLE BODY AND VEHICLE", which is incorporated herein by reference in its entirety.

### TECHNICAL FIELD

This application relates to the technical field of new energy vehicles, and more particularly, to a vehicle body and a vehicle.

### BACKGROUND

New energy vehicles have become an important part of the sustainable development of the vehicle industry due to their energy-saving and environmentally friendly advantages. With the development of new energy vehicles, the demand for longer driving ranges has increased. To ensure that power consumption during vehicle operation can be promptly replenished, a solution of battery swapping to supplement power loss has emerged.

For new energy vehicles, reducing battery swapping costs is a technical problem urgently needing resolution.

### SUMMARY

This application provides a vehicle body and a vehicle, which can effectively reduce battery swapping costs.

This application is implemented through the following technical solutions:

According to a first aspect, this application provides a vehicle body, the vehicle body including: a bracket assembly, where the bracket assembly is provided with multiple groups of first mounting portions, each group of the first mounting portions being configured to detachably connect one battery; and multiple first connectors, the number of the first connectors being equal to the number of groups of the first mounting portions, each first connector being configured to connect with a second connector of one battery.

In the above solution, the vehicle body includes a bracket assembly and multiple first connectors. By providing multiple first connectors and multiple groups of first mounting portions on the bracket assembly, the number of batteries to be replaced can be adjusted based on driving range requirements (that is, on-demand battery swapping; for example, when the required driving range is short, a smaller number of batteries can be mounted on a corresponding number of groups of the first mounting portions, with the second connector of each battery connected to a corresponding first connector; when the required driving range is long, a larger number of batteries can be mounted on a corresponding number of groups of the first mounting portions, with the second connector of each battery connected to a corresponding first connector), thereby saving the costs of additional batteries and effectively reducing battery swapping costs.

According to some embodiments of this application, the bracket assembly includes a frame.

In the above solution, the frame can serve as the main support of the vehicle body, capable of bearing various loads inside and outside the vehicle body. The frame can be provided with the first mounting portions, which, on the one hand, can stably support the batteries, improving the connection stability between the batteries and the vehicle body and reducing the risk of battery detachment; on the other hand, the frame is located at the bottom of the vehicle body, allowing batteries to be swapped from below the vehicle body. Compared to the current backpack-style battery swapping for heavy trucks (where batteries are mounted on the back of the cab), this changes the positional layout of the batteries in the vehicle body, effectively saving space in the longitudinal direction of the vehicle, thereby increasing the cargo capacity of the vehicle.

According to some embodiments of this application, the bracket assembly further includes a bracket, the bracket being fixedly connected to the frame and the bracket being provided with the first mounting portions.

In the above solution, by fixedly connecting the bracket to the frame, on the one hand, the impact on the structural reliability of the vehicle body due to the installation of the bracket can be reduced; on the other hand, the bracket can be stably disposed on the vehicle body to effectively support the batteries; furthermore, the bracket can be retrofitted onto the frame of existing vehicle bodies with low installation difficulty and high installation efficiency, enabling existing vehicles to quickly acquire on-demand battery swapping functionality.

According to some embodiments of this application, the frame includes a first longitudinal beam and a second longitudinal beam, a highest point of the bracket being not higher than an upper end surface of the first longitudinal beam and a highest point of the bracket being not higher than an upper end surface of the second longitudinal beam.

In the above solution, the frame may include the first longitudinal beam and the second longitudinal beam among main beams, for example, the frame may include the first longitudinal beam and the second longitudinal beam of main beams for large vehicles (such as heavy trucks). By disposing the bracket on the frame without protruding above the upper end surfaces of the first longitudinal beam and the second longitudinal beam, the space above the first longitudinal beam and the second longitudinal beam is not occupied, which, on the one hand, reduces interference with the interior of the vehicle body due to the installation of the bracket; on the other hand, for retrofitting brackets onto existing vehicle bodies, the reinforcement difficulty of the bracket is low, and the implementation feasibility is high; furthermore, when batteries are mounted on the bracket or the first longitudinal beam and the second longitudinal beam, the batteries can be swapped from below the vehicle body. Compared to the current backpack-style battery swapping for heavy trucks (where batteries are mounted on the back of the cab), this changes the positional layout of the batteries in the vehicle body, effectively saving space in the longitudinal direction of the vehicle, thereby increasing the cargo capacity of the vehicle.

According to some embodiments of this application, in a direction from the first longitudinal beam to the second longitudinal beam, the bracket extends beyond the second longitudinal beam.

In the above solution, by configuring the bracket to extend beyond the second longitudinal beam, a larger installation area can be provided for the batteries, thereby allowing the installation of more batteries or larger-sized batteries to meet different driving range requirements of different vehicles or varying driving range requirements of a vehicle.

According to some embodiments of this application, a portion of the bracket extending beyond the second longitudinal beam is provided with at least one first mounting portion.

In the above solution, by providing at least one first mounting portion on the portion of the bracket extending beyond the second longitudinal beam, the portion of the battery extending beyond the second longitudinal beam can be connected, enabling the battery to be stably connected to the bracket, thereby improving the structural stability of the battery and the bracket.

According to some embodiments of this application, in a direction from the second longitudinal beam to the first longitudinal beam, the bracket extends beyond the first longitudinal beam.

In the above solution, by configuring the bracket to extend beyond the first longitudinal beam, a larger installation area can be provided for the batteries, thereby allowing the installation of more batteries or larger-sized batteries to meet different driving range requirements of different vehicles or varying driving range requirements of a vehicle.

According to some embodiments of this application, a portion of the bracket extending beyond the first longitudinal beam is provided with at least one first mounting portion.

In the above solution, by providing at least one first mounting portion on the portion of the bracket extending beyond the first longitudinal beam, the portion of the battery extending beyond the first longitudinal beam can be connected, enabling the battery to be stably connected to the bracket, thereby improving the structural stability of the battery and the bracket.

According to some embodiments of this application, at least a portion of the bracket is located between the first longitudinal beam and the second longitudinal beam.

In the above solution, a center of gravity of the vehicle body may be located between the first longitudinal beam and the second longitudinal beam. Thus, on the one hand, by disposing at least a portion of the bracket between the first longitudinal beam and the second longitudinal beam, the impact on the center of gravity position of the vehicle body due to the installation of the bracket can be reduced, improving the driving stability of the vehicle body; on the other hand, when batteries are mounted on the bracket, since a portion of the battery or some batteries can be located between the first longitudinal beam and the second longitudinal beam, the impact on the center of gravity position of the vehicle body due to battery installation can be reduced, improving the driving stability of the vehicle body.

According to some embodiments of this application, a portion of the bracket located between the first longitudinal beam and the second longitudinal beam is provided with at least one first mounting portion.

In the above solution, by providing at least one first mounting portion on the portion of the bracket located between the first longitudinal beam and the second longitudinal beam, the portion of the battery located between the first longitudinal beam and the second longitudinal beam can be connected, enabling the battery to be stably connected to the bracket, thereby improving the structural stability of the battery and the bracket.

According to some embodiments of this application, the frame is provided with a second mounting portion, the second mounting portions being configured to detachably connect a battery.

In the above solution, by providing second mounting portions on the frame, which cooperate with the first mounting portions to detachably connect the battery, the connection stability between the battery and the vehicle body can be improved, enhancing the driving reliability of the vehicle body.

According to some embodiments of this application, the frame includes the first longitudinal beam and the second longitudinal beam, the second mounting portion being provided on the first longitudinal beam and/or the second longitudinal beam.

In the above solution, the frame may include the first longitudinal beam and the second longitudinal beam among main beams, for example, the frame may include the first longitudinal beam and the second longitudinal beam of main beams for large vehicles (such as heavy trucks). The second mounting portions provided on the first longitudinal beam and/or the second longitudinal beam can effectively cooperate with the first mounting portions, enabling the battery to be effectively connected to the vehicle body, reducing the risk of battery detachment, and improving the driving reliability of the vehicle body.

According to some embodiments of this application, the frame includes the first longitudinal beam, the second longitudinal beam, and a crossbeam, the crossbeam being connected between the first longitudinal beam and the second longitudinal beam and the second mounting portion being provided on the crossbeam.

In the above solution, the frame may include the first longitudinal beam, the second longitudinal beam, and the crossbeam among main beams, for example, the frame may include the first longitudinal beam, the second longitudinal beam, and the crossbeam of main beams for large vehicles (such as heavy trucks). On the one hand, the second mounting portions provided on the crossbeam can effectively cooperate with the first mounting portions, enabling the battery to be effectively connected to the vehicle body, reducing the risk of battery detachment, and improving the driving reliability of the vehicle body; on the other hand, since the crossbeam is located between the first longitudinal beam and the second longitudinal beam, providing the second mounting portions on the crossbeam can make reasonable use of the space between the first longitudinal beam and the second longitudinal beam, reducing interference of the second mounting portions with the bracket and improving the battery swapping efficiency of the vehicle body.

According to some embodiments of this application, the bracket assembly has multiple accommodation spaces, the multiple accommodation spaces being arranged along a first direction, each accommodation space being configured to accommodate one battery, and each accommodation space being correspondingly provided with a group of the first mounting portions.

In the above solution, by providing multiple accommodation spaces along the first direction, with each accommodation space correspondingly provided with a group of first mounting portions, each battery can be orderly installed in a corresponding accommodation space, with batteries not interfering with each other, thereby improving the battery swapping efficiency of the vehicle body.

According to some embodiments of this application, the accommodation space has a downwardly open opening, the opening being configured to allow a battery to enter or exit the accommodation space.

In the above solution, by providing a downwardly open opening, it is convenient for batteries to enter or exit the accommodation space from below the vehicle body. Compared to the current backpack-style battery swapping for heavy trucks, on the one hand, this saves space above the frame, reducing the risk of damage to the vehicle body due to interference from the battery swapping mechanism occupying space above the frame; on the other hand, it changes the positional layout of the batteries in the vehicle body, placing the batteries at the bottom of the vehicle body, effectively saving space in the longitudinal direction of the vehicle, thereby increasing the cargo capacity of the vehicle.

According to some embodiments of this application, the first direction is parallel to a longitudinal direction of the frame.

In the above solution, the longitudinal direction of the frame may be parallel to the driving direction of the vehicle body, and the longitudinal direction of the frame may be the extension direction of longitudinal beams in the frame. By setting the first direction to be parallel to the longitudinal direction of the frame, that is, arranging multiple batteries along the longitudinal direction of the frame, the center of gravity of the batteries can be brought closer to the center in the lateral direction of the frame, reducing the impact of battery installation on the center of gravity position of the vehicle body, thereby providing the vehicle body with higher driving reliability.

According to some embodiments of this application, the frame includes the first longitudinal beam and the second longitudinal beam, each accommodation space being divided by the first longitudinal beam and the second longitudinal beam into a first subspace, a second subspace, and a third subspace, the first subspace being located between the first longitudinal beam and the second longitudinal beam, the second subspace being located on a side of the first longitudinal beam facing away from the second longitudinal beam, and the third subspace being located on a side of the second longitudinal beam facing away from the first longitudinal beam.

In the above solution, the frame may include the first longitudinal beam and the second longitudinal beam among main beams, for example, the frame may include the first longitudinal beam and the second longitudinal beam of main beams for large vehicles (such as heavy trucks). By dividing the accommodation space into the first subspace, the second subspace, and the third subspace based on the first longitudinal beam and the second longitudinal beam, the weight of the battery can be distributed based on the positions of the first longitudinal beam and the second longitudinal beam, reducing the impact of battery installation on the center of gravity position of the vehicle body, thereby providing the vehicle body with higher driving reliability.

According to some embodiments of this application, the first subspace is correspondingly provided with at least one first mounting portion, the second subspace is correspondingly provided with at least one first mounting portion, and the third subspace is correspondingly provided with at least one first mounting portion.

In the above solution, by distributing at least one first mounting portion in the first subspace, the second subspace, and the third subspace, the battery can be effectively connected, enabling the battery to be stably mounted on the vehicle body, reducing the risk of battery detachment, and providing the vehicle body with higher driving reliability.

According to some embodiments of this application, at least two first mounting portions are provided in the first subspace, at least two first mounting portions are provided in the second subspace, and at least two first mounting portions are provided in the third subspace.

In the above solution, by distributing at least two first mounting portions in the first subspace, the second subspace, and the third subspace, that is, providing at least six first mounting portions in the accommodation space, with the six first mounting portions arranged according to the first subspace, the second subspace, and the third subspace, the battery can be uniformly connected, enabling the battery to be stably positioned in the accommodation space, reducing the risk of battery detachment, and providing the vehicle body with higher driving reliability.

According to some embodiments of this application, at least two first mounting portions in the first subspace are respectively disposed on opposite sides of the first subspace along the longitudinal direction of the frame; and/or, at least two first mounting portions in the second subspace are respectively disposed on opposite sides of the second subspace along the longitudinal direction of the frame; and/or, at least two first mounting portions in the third subspace are respectively disposed on opposite sides of the third subspace along the longitudinal direction of the frame.

In the above solution, by disposing at least two first mounting portions in the first subspace on opposite sides of the first subspace along the longitudinal direction of the frame, the battery can be constrained and connected on both sides in the longitudinal direction of the frame, ensuring uniform force distribution and reducing the risk of battery detachment; similarly, by disposing at least two first mounting portions in the second subspace on opposite sides of the second subspace along the longitudinal direction of the frame, the battery can be constrained and connected on both sides in the longitudinal direction of the frame, ensuring uniform force distribution and reducing the risk of battery detachment; similarly, by disposing at least two first mounting portions in the third subspace on opposite sides of the third subspace along the longitudinal direction of the frame, the battery can be constrained and connected on both sides in the longitudinal direction of the frame, ensuring uniform force distribution and reducing the risk of battery detachment, thereby providing the vehicle body with higher driving reliability.

According to some embodiments of this application, the first direction is parallel to a lateral direction of the frame.

In the above solution, the lateral direction of the frame may be perpendicular to the driving direction of the vehicle body, the lateral direction of the frame may be the arrangement direction of a pair of longitudinal beams in the frame, and the lateral direction of the frame may also be understood as the width direction of the vehicle body. By setting the first direction to be parallel to the lateral direction of the frame, that is, arranging multiple batteries along the lateral direction of the frame, battery swapping can be performed along the width direction of the vehicle body, which, compared to swapping batteries along the longitudinal direction of the vehicle body, can effectively reduce the movement path of the battery, thereby improving battery swapping efficiency.

According to some embodiments of this application, the frame includes the first longitudinal beam and the second longitudinal beam, the number of accommodation spaces being at least two, at least one accommodation space being located on a side of the first longitudinal beam facing away from the second longitudinal beam, and at least one accommodation space being located on a side of the second longitudinal beam facing away from the first longitudinal beam.

In the above solution, the frame may include the first longitudinal beam and the second longitudinal beam among main beams, for example, the frame may include the first longitudinal beam and the second longitudinal beam of main beams for large vehicles (such as heavy trucks). By providing accommodation spaces on the side of the first longitudinal beam facing away from the second longitudinal beam and on the side of the second longitudinal beam facing away from the first longitudinal beam, that is, arranging batteries on both sides of the frame, the impact of battery installation on the center of gravity position of the vehicle body can be reduced, providing the vehicle body with higher driving reliability.

According to some embodiments of this application, the number of accommodation spaces is at least three, at least one accommodation space being located between the first longitudinal beam and the second longitudinal beam.

In the above solution, by arranging batteries between the first longitudinal beam and the second longitudinal beam, the impact of battery installation on the center of gravity position of the vehicle body can be reduced, providing the vehicle body with higher driving reliability.

According to some embodiments of this application, the first mounting portion is provided at at least one end of the accommodation space along the first direction.

In the above solution, by providing the first mounting portion at at least one end of the accommodation space along the first direction, the battery can be effectively constrained and connected in the first direction, reducing the risk of battery detachment and improving the driving reliability of the vehicle body.

According to some embodiments of this application, the first mounting portions are provided at opposite ends of the accommodation space along the first direction.

In the above solution, by providing the first mounting portions at opposite ends of the accommodation space along the first direction, the battery can be effectively constrained and connected in the first direction, ensuring uniform force distribution, reducing the risk of battery detachment, and improving the driving reliability of the vehicle body.

According to some embodiments of this application, the accommodation space has a first end and a second end opposite to each other along the first direction, the first mounting portion provided at the first end being offset from the first mounting portion provided at the second end.

In the above solution, by offsetting the first mounting portions at opposite ends of the accommodation space, on the one hand, it provides a foolproof effect for battery installation, reducing the risk of incorrect battery installation; on the other hand, it provides a foolproof effect for bracket installation, reducing the risk of incorrect bracket installation.

According to some embodiments of this application, the first mounting portions at two ends of two adjacent accommodation spaces that are close to each other are offset.

In the above solution, during battery swapping, multiple battery swapping actuators (for example, swapping heads) can simultaneously act on the connection points between multiple first mounting portions and the batteries. Since two adjacent accommodation spaces are close to each other in the first direction, by offsetting the first mounting portions at two ends of two adjacent accommodation spaces that are close to each other, the risk of interference between adjacent battery swapping actuators can be reduced, enabling multiple battery swapping actuators to operate simultaneously, thereby improving battery swapping efficiency.

According to some embodiments of this application, a dimension of the accommodation space along the first direction is smaller than a dimension of the accommodation space along a second direction, the first direction, the second direction, and a gravity direction being mutually perpendicular.

In the above solution, the dimension of the accommodation space along the first direction being smaller than the dimension of the accommodation space along the second direction can be understood as the dimension of a battery cell accommodated in the accommodation space along the first direction being smaller than the dimension of the battery cell along the second direction, that is, the dimension of the battery along the second direction can be the length of the battery. Therefore, when the first mounting portions are provided at at least one end of the accommodation space along the first direction, it can be understood that the first mounting portions correspond to the sides of the shorter dimension of the battery, which, compared to corresponding to the sides of the longer dimension of the battery, can reduce the risk of the battery sagging downward in the middle due to gravity, thereby improving the connection stability between the battery and the bracket.

According to some embodiments of this application, the frame includes a pair of longitudinal beams and the bracket includes at least one mounting unit, each mounting unit including a mounting beam and a connecting portion and the mounting beam extending along a lateral direction of the frame; along the lateral direction of the frame, the connecting portion is connected to an outer side surface of the longitudinal beam; the mounting beam is connected to the connecting portion; and the mounting beam is provided with the first mounting portion.

In the above solution, the frame may include a pair of longitudinal beams among main beams, for example, the frame may include a pair of longitudinal beams of main beams for large vehicles (such as heavy trucks). By providing the connecting portion, the mounting beam can be effectively connected to the longitudinal beam, enabling the mounting beam to effectively support the battery through the first mounting portion, reducing the risk of battery detachment and improving the driving reliability of the vehicle body.

According to some embodiments of this application, the connecting portion extends along the gravity direction.

In the above solution, by configuring the connecting portion to extend along the gravity direction, the connecting portion has a larger area connected to the longitudinal beam in the gravity direction, thereby improving the connection stability between the mounting beam and the longitudinal beam, reducing the risk of battery detachment, and improving the driving reliability of the vehicle body.

According to some embodiments of this application, the mounting unit further includes a rib plate, along the lateral direction of the frame, the rib plate being located outside the frame and the rib plate connecting the connecting portion and the mounting beam.

In the above solution, by providing a rib plate outside the frame, on the one hand, the space between the connecting portion and the mounting beam can be reasonably utilized; on the other hand, the structural strength of the connecting portion and the mounting beam can be improved, reducing the risk of battery detachment and improving the driving reliability of the vehicle body.

According to some embodiments of this application, the connecting portion includes a first sub-connecting portion and a second sub-connecting portion, the first sub-connecting portion and the second sub-connecting portion extending in opposite directions from edges of the rib plate, and both the first sub-connecting portion and the second sub-connecting portion being connected to the outer side surface of the longitudinal beam.

In the above solution, by providing the first sub-connecting portion and the second sub-connecting portion, and disposing the first sub-connecting portion and the second sub-connecting portion on opposite sides of the rib plate, the connection stability between the connecting portion and the longitudinal beam can be effectively improved, thereby effectively enhancing the structural stability among the connecting portion, the rib plate, and the mounting beam, effectively reducing the risk of battery detachment, and improving the driving reliability of the vehicle body.

According to some embodiments of this application, the bracket includes multiple mounting units, the multiple mounting units being spaced apart along the longitudinal direction of the frame; and the bracket further includes a connecting beam, the connecting beam extending along the longitudinal direction of the frame and the connecting beam connecting two adjacent mounting units.

In the above solution, on the one hand, by providing multiple mounting units, multiple batteries can be supported, achieving the purpose of on-demand battery swapping and reducing battery swapping costs. On the other hand, by providing the connecting beam to connect two adjacent mounting units, the structural stability between the two adjacent mounting units can be effectively improved, enhancing the battery support capacity, reducing the risk of battery detachment, and improving the driving reliability of the vehicle body.

According to some embodiments of this application, each mounting unit includes two connecting portions, the two connecting portions being spaced apart along the lateral direction of the frame, the pair of longitudinal beams being located between the two connecting portions, and each connecting portion being connected to an outer side surface of a corresponding longitudinal beam.

In the above solution, by providing two connecting portions, on the one hand, each connecting portion can connect to the outer side surface of a corresponding longitudinal beam, that is, the two longitudinal beams of the frame are respectively connected by corresponding connecting portions, ensuring a stable connection relationship between the mounting unit and the frame and reducing the risk of battery detachment and improving the driving reliability of the vehicle; on the other hand, since two connecting portions are provided and spaced apart along the lateral direction of the frame, the mounting beam can be provided with more first mounting portions to support larger-sized batteries, thereby effectively increasing the driving range of the vehicle.

According to some embodiments of this application, the bracket includes multiple mounting units, the multiple mounting units being spaced apart along the longitudinal direction of the frame, an accommodation space being formed between two adjacent mounting units, and each accommodation space being configured to accommodate one battery.

In the above solution, by spacing multiple mounting units along the longitudinal direction of the frame to form multiple accommodation spaces arranged along the longitudinal direction of the frame, each battery can be orderly installed in a corresponding accommodation space, with batteries not interfering with each other, thereby improving the battery swapping efficiency of the vehicle body.

According to some embodiments of this application, each mounting unit includes one connecting portion; and the number of brackets is two, and along the lateral direction of the frame, the pair of longitudinal beams is located between the two brackets.

In the above solution, on the one hand, the mounting unit has a simple structure and is easy to manufacture. The mounting unit, through one connecting portion, enables the mounting beam to be stably connected to the outer side surface of one of the longitudinal beams, that is, one bracket can be stably positioned outside one of the longitudinal beams of the frame. On the other hand, by providing brackets on both sides of the frame, more batteries can be supported, increasing the upper limit of the number of batteries for swapping, thereby improving the driving range of the vehicle.

According to some embodiments of this application, the bracket includes multiple mounting units, the multiple mounting units being spaced apart along the longitudinal direction of the frame and a space being formed between two adjacent mounting units for accommodating a battery.

In the above solution, along the longitudinal direction of the frame, the bracket providing multiple mounting units can form multiple spaces to accommodate batteries, reducing the risk of space wastage due to batteries occupying external space. In some embodiments, when batteries are arranged along the longitudinal direction of the frame, multiple batteries can be arranged along the lateral direction of the frame, and the spaces formed by multiple mounting units in one frame can collectively accommodate at least one row of batteries. In some embodiments, when batteries are arranged along the lateral direction of the frame, a battery can be supported by two frames.

According to some embodiments of this application, the frame further includes a crossbeam, the crossbeam being connected between the pair of longitudinal beams; and the crossbeam is provided with a second mounting portion, the second mounting portions being detachably connected to the battery.

In the above solution, by providing second mounting portions on the crossbeam, mounting points are established between the battery and the crossbeam, improving the connection stability between the battery and the vehicle body and reducing the risk of battery detachment. In some embodiments, when batteries are arranged along the longitudinal direction of the frame, multiple batteries can be arranged along the lateral direction of the frame, and by providing second mounting portions on the crossbeam, the position corresponding to the crossbeam can support at least one row of batteries. In some embodiments, when batteries are arranged along the lateral direction of the frame, a battery can be supported by the first mounting portions on two frames and the mounting portions on the crossbeam.

According to some embodiments of this application, the bracket assembly further includes a reinforcement plate, the reinforcement plate being connected to the crossbeam and the reinforcement plate being provided with through-holes corresponding to the second mounting portions.

In the above solution, by providing the reinforcement plate, the structural strength of the crossbeam can be effectively improved, reducing the risk of damage to the crossbeam due to supporting the battery, and enhancing the connection stability between the crossbeam and the battery.

According to some embodiments of this application, the mounting beam is a square tube.

In the above solution, by configuring the mounting beam as a square tube, on the one hand, the material cost is low; on the other hand, the material has high structural strength, enabling effective support of the battery and reducing the risk of battery detachment.

According to some embodiments of this application, along the lateral direction of the frame, a projection of the bracket at least partially overlaps with a projection of the frame.

In the above solution, the lateral direction of the frame may be perpendicular to the driving direction of the vehicle body. By configuring the projection of the bracket to at least partially overlap with the projection of the frame, the ground clearance of the bracket can be effectively increased, reducing the impact of bracket installation on the ground clearance of the vehicle body, thereby improving the driving reliability of the vehicle body.

According to some embodiments of this application, the bracket has an upwardly open avoidance slot, at least a portion of the frame being accommodated in the avoidance slot.

In the above solution, by providing an avoidance slot on the bracket, at least a portion of the frame can be accommodated, making reasonable use of the space occupied by the at least a portion of the frame, thereby reducing the impact of the bracket provision on the ground clearance of the vehicle body.

According to some embodiments of this application, the frame is connected to a bottom wall and/or a side wall of the avoidance slot.

In the above solution, since at least a portion of the frame is accommodated in the avoidance slot, the frame can be connected to the bottom wall and/or the side wall of the avoidance slot, making reasonable use of the avoidance slot, which not only accommodates the bracket but also enables the connection between the bracket and the frame, simplifying the connection structure between the bracket and the frame, reducing installation difficulty, and lowering installation costs.

According to some embodiments of this application, the first connector is mounted on the bracket assembly.

In the above solution, by mounting the first connector on the bracket assembly, the first connector and the second connector can be connected simultaneously when the battery is mounted on the bracket assembly, improving battery swapping efficiency.

According to some embodiments of this application, the vehicle body includes a cargo compartment, the bracket assembly being located below the cargo compartment.

In the above solution, the vehicle body may be a vehicle body for freight purposes, which may include a cargo compartment for carrying goods, for example, the vehicle body may be a vehicle body for a heavy truck. By disposing the bracket assembly below the cargo compartment, the space below the cargo compartment can be reasonably utilized, and compared to the current backpack-style battery swapping for heavy trucks (where batteries are mounted on the back of the cab), this changes the positional layout of the batteries in the vehicle body, effectively saving space in the longitudinal direction of the vehicle, reducing the occupation of the space where the cargo compartment is located, and increasing the cargo capacity of the vehicle.

According to a second aspect, some embodiments of this application further provide a vehicle, including the vehicle body according to any one of the above embodiments and at least one battery. Each battery is detachably connected to a group of the first mounting portions, and a second connector of each battery is connected to one first connector.

In the above solution, a vehicle is provided, where the vehicle body in the vehicle can perform on-demand battery swapping, that is, adjusting the number of batteries to be swapped based on its own driving range requirements, thereby achieving the purpose of reducing battery swapping costs.

According to some embodiments of this application, the battery has an avoidance space for avoiding the bracket assembly.

In the above solution, by providing an avoidance space on the battery, the space occupied by the bracket assembly can be reasonably utilized, increasing the capacity of the battery and providing a longer driving range for the vehicle.

According to some embodiments of this application, the bracket assembly includes a frame; and along the lateral direction of the frame, a projection of the battery at least partially overlaps with a projection of the frame.

In the above solution, the lateral direction of the frame may be perpendicular to the driving direction of the vehicle and may also be understood as the width direction of the vehicle. Along the lateral direction of the frame, by configuring the projection of the battery to at least partially overlap with the projection of the frame, the battery can make reasonable use of a height space of the vehicle body, increasing the capacity of the battery and providing a longer driving range for the vehicle.

According to some embodiments of this application, the bracket assembly includes the frame; and the battery includes a casing and multiple battery cells disposed within the casing, and along the lateral direction of the frame, a projection of at least a portion of the battery cells overlaps with a projection of the frame.

In the above solution, the lateral direction of the frame may be perpendicular to the driving direction of the vehicle and may also be understood as the width direction of the vehicle. Along the lateral direction of the frame, by configuring at least a portion of the battery cells to have a projection that at least partially overlaps with the projection of the frame, at least a portion of the battery cells can make reasonable use of the height space of the vehicle body, increasing the capacity of the battery and providing a longer driving range for the vehicle.

According to some embodiments of this application, a lowest point of the battery is lower than a lowest point of the bracket.

In the above solution, by configuring the lowest point of the battery to be lower than the lowest point of the bracket, the battery can make reasonable use of the height space of the vehicle body, increasing the capacity of the battery and providing a longer driving range for the vehicle.

According to some embodiments of this application, the vehicle is a heavy truck.

In the above solution, the heavy truck may be a heavy-duty truck, which requires different battery capacities when transporting different goods or traveling different routes (for example, one battery for short-range conditions, two batteries for medium-range conditions, and three batteries for long-range conditions). Through the vehicle body provided above, on-demand battery swapping can be achieved (for example, for short-range conditions, only one battery is swapped, that is, one battery is mounted; for medium-range conditions, only two batteries are swapped, that is, two batteries are mounted; for long-range conditions, three batteries are swapped, that is, three batteries are mounted), thereby saving the costs of additional batteries and effectively reducing battery swapping costs.

The above description is only an overview of the technical solutions of this application. To enable a clearer understanding of the technical means of this application, the solutions may be implemented in accordance with the content of the specification, and to make the above and other objectives, features, and advantages of this application more apparent and understandable, specific embodiments of this application are provided below.

### BRIEF DESCRIPTION OF DRAWINGS

To more clearly illustrate the technical solutions in the embodiments of this application, the drawings required for use in the embodiments will be briefly introduced below. It should be understood that the following drawings only show certain embodiments of this application and should not be regarded as limiting the scope. For those of ordinary skill in the art, other related drawings can be obtained based on these drawings without creative effort.
FIG. 1 is a schematic structural diagram of a vehicle provided by some embodiments of this application;
FIG. 2 is a top view of a partial structure of a vehicle body in some embodiments of this application;
FIG. 3 is a schematic diagram of a bracket assembly and a battery in some embodiments of this application;
FIG. 4 is a front view of a bracket assembly and a battery in some embodiments of this application;
FIG. 5 is a schematic diagram of a bracket assembly in some other embodiments of this application;
FIG. 6 is a schematic diagram of a bracket assembly and a battery in some other embodiments of this application;
FIG. 7 is a schematic diagram of a frame and a bracket in some embodiments of this application;
FIG. 8 is an enlarged view of portion A in FIG. 7;
FIG. 9 is a schematic diagram of a partial structure of a connecting portion, a mounting beam, a rib plate, and a longitudinal beam in some embodiments of this application;
FIG. 10 is a schematic diagram of a mounting unit in some embodiments of this application;
FIG. 11 is a front view of a mounting unit and a longitudinal beam in some embodiments of this application;
FIG. 12 is a schematic diagram of a bracket and a frame in some other embodiments of this application;
FIG. 13 is a bottom view of a frame and a bracket in some other embodiments of this application;
FIG. 14 is a front view of a bracket and a frame in some embodiments of this application;
FIG. 15 is a front view of a bracket and a frame in some other embodiments of this application;
FIG. 16 is a schematic diagram of a vehicle body in some embodiments of this application; and
FIG. 17 is a schematic diagram of a battery in some embodiments of this application.

Description of reference signs:
10000, vehicle; 2000, battery; 2001, avoidance space; 3000, controller; 4000, motor; 1000, vehicle body; 100, bracket assembly; 100a, accommodation space; 100b, first subspace; 100c, second subspace; 100d, third subspace; 200, first connector; 300, first mounting portion; 301, second mounting portion; 400, cargo compartment; 10, bracket; 10a, avoidance slot; 11, mounting unit; 12, mounting beam; 13, connecting portion; 130, first sub-connecting portion; 131, second sub-connecting portion; 14, rib plate; 140, flange; 15, connecting beam; 16, reinforcement plate; 17, reinforcement piece; 170, first portion; 171, second portion; 172, third portion; 20, frame; 21, first longitudinal beam; 22, second longitudinal beam; 23, crossbeam; x, lateral direction of the frame; y, longitudinal direction of the frame; and z, gravity direction.

### DESCRIPTION OF EMBODIMENTS

To make the objectives, technical solutions, and advantages of the embodiments of this application clearer, the technical solutions in the embodiments of this application will be described clearly and completely below with reference to the drawings in the embodiments of this application. It is apparent that the described embodiments are some, but not all, embodiments of this application. Based on the embodiments in this application, all other embodiments obtained by those of ordinary skill in the art without creative effort fall within the scope of protection of this application.

Unless otherwise defined, all technical and scientific terms used in this application have the same meanings as commonly understood by those skilled in the technical field of this application; the terms used in the specification of this application are for the purpose of describing specific embodiments only and are not intended to limit this application; the terms "including" and "having" and any variations thereof in the specification, claims, and the above description of the drawings of this application are intended to cover non-exclusive inclusion. The terms "first", "second", and the like, in the specification and claims or the above drawings of this application are used to distinguish different objects and not to describe a specific order or hierarchical relationship.

Reference to "embodiment" in this application means that a specific feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in this application can be combined with other embodiments.

In the description of this application, it should be noted that, unless otherwise explicitly specified and limited, the terms "installed", "connected", "connection", and "attached" should be understood in a broad sense, for example, it may be a fixed connection, a detachable connection, or an integral connection; it may be a direct connection or an indirect connection through an intermediate medium, or it may be an internal communication between two elements. For those of ordinary skill in the art, the specific meanings of the above terms in this application can be understood according to specific circumstances.

The term "and/or" in this application is merely an association relationship describing associated objects, indicating that three relationships may exist, for example, A and/or B may indicate: A exists alone, A and B exist simultaneously, and B exists alone. Additionally, the character "/" in this application generally indicates that the associated objects before and after it are in an "or" relationship.

The term "multiple" appearing in this application refers to two or more (including two), similarly, "multiple groups" refers to two or more groups (including two groups), and "multiple pieces" refers to two or more pieces (including two pieces).

In some embodiments, the battery may be a battery module, and when there are multiple battery cells, the multiple battery cells are arranged and fixed to form a battery module.

In some embodiments, the battery may be a battery pack, the battery pack including a casing and battery cells, the battery cells or battery module being accommodated in the casing.

In some embodiments, the battery cell may be a secondary battery, where a secondary battery refers to a battery cell that can be recharged to activate the active material and continue to be used after discharge. The battery cell may be a lithium-ion battery, sodium-ion battery, sodium-lithium-ion battery, lithium-metal battery, sodium-metal battery, lithium-sulfur battery, magnesium-ion battery, nickel-hydrogen battery, nickel-cadmium battery, lead-acid battery, and the like, which are not limited in the embodiments of this application.

Currently, new energy vehicles often use battery swapping to promptly replenish power loss during operation. For new energy vehicles, reducing battery swapping costs is a technical problem urgently needing resolution. Currently, new energy vehicles are equipped with a single integrated battery with a fixed capacity, that is, the driving range of the new energy vehicle is fixed, and during battery swapping, this single integrated battery is replaced. However, for different driving range requirements, the required battery capacity varies; if a shorter driving range is required, only a smaller capacity battery is needed, but if a larger battery is configured, the additional battery capacity incurs extra costs, leading to higher battery swapping costs.

In view of this, to address the issue of high battery swapping costs due to different driving range requirements, some embodiments of this application provide a vehicle body, the vehicle body including a bracket assembly and multiple first connectors. Multiple groups of first mounting portions provided on the bracket assembly are configured to detachably connect a corresponding number of batteries. Multiple first connectors provided are configured to connect with second connectors of a corresponding number of batteries.

In the above solution, by providing multiple groups of first mounting portions and multiple first connectors, the number of batteries to be replaced can be adjusted based on driving range requirements (that is, on-demand battery swapping; for example, when the required driving range is short, a smaller number of batteries can be mounted on a corresponding number of mounting portions in the multiple groups of first mounting portions, with the second connector of each battery connected to a corresponding first connector; when the required driving range is long, a larger number of batteries can be mounted on a corresponding number of mounting portions in the multiple groups of first mounting portions, with the second connector of each battery connected to a corresponding first connector), thereby saving the costs of additional batteries and effectively reducing battery swapping costs.

The vehicle body disclosed in the embodiments of this application may be used, but is not limited to, in vehicle bodies for passenger vehicles, commercial freight vehicles, and vehicles of other types. The vehicle disclosed in the embodiments of this application may be used, but is not limited to, in passenger vehicles, commercial freight vehicles, and vehicles of other types.

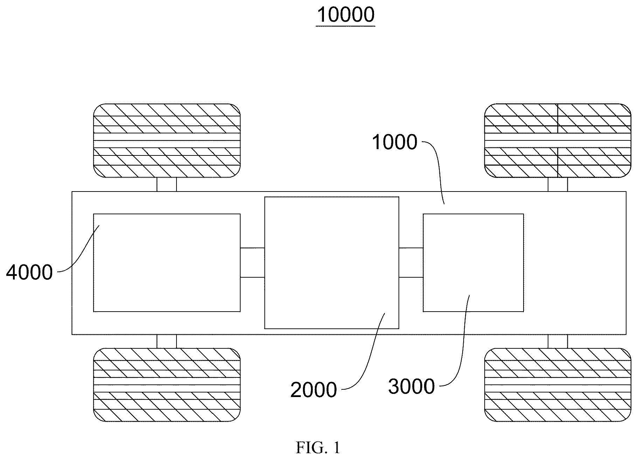

Referring to FIG. 1, FIG. 1 is a schematic structural diagram of a vehicle 10000 provided by some embodiments of this application. The vehicle 10000 may be a new energy vehicle, and the new energy vehicle may be a pure electric vehicle, a swappable hybrid vehicle, or a swappable extended-range vehicle, and the like. The vehicle 10000 includes a vehicle body 1000 and a battery 2000. The battery 2000 may be disposed at the bottom, front, or rear of the vehicle body 1000. The battery 2000 may be used for powering the vehicle 10000, for example, the battery 2000 may serve as an operational power source for the vehicle 10000, used for the electrical system of the vehicle 10000, such as for starting, navigation, and operational power requirements during driving of the vehicle 10000.

The vehicle body 1000 may further include a controller 3000 and a motor 4000, the controller 3000 being configured to control the battery 2000 to supply power to the motor 4000, for example, for the operational power requirements during starting, navigation, and driving of the vehicle 10000.

In some embodiments of this application, the battery 2000 may not only serve as an operational power source for the vehicle 10000 but also as a driving power source for the vehicle 10000, replacing or partially replacing fuel or natural gas to provide driving power for the vehicle 10000.

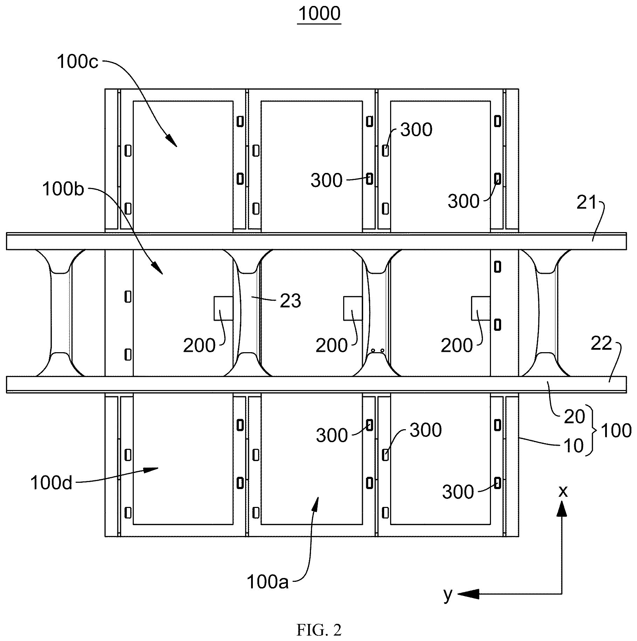

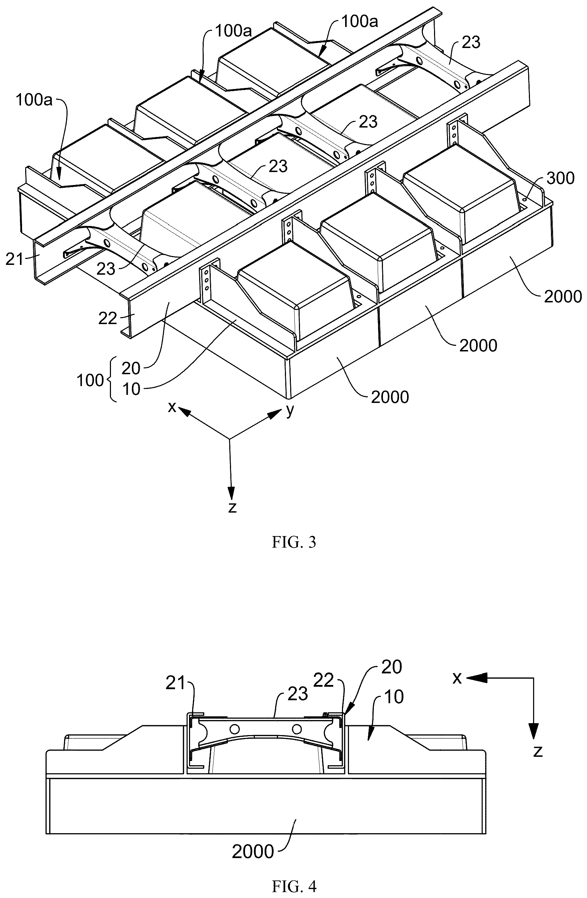

Some embodiments of this application provide a vehicle body 1000, referring to FIG. 2 and FIG. 3, FIG. 2 is a top view of a partial structure of a vehicle body 1000 in some embodiments of this application. FIG. 3 is a schematic diagram of a bracket assembly 100 and a battery 2000 in some embodiments of this application.

The vehicle body 1000 includes a bracket assembly 100 and multiple first connectors 200. The bracket assembly 100 is provided with multiple groups of first mounting portions 300, each group of the first mounting portions 300 being configured to detachably connect one battery 2000, the number of the first connectors 200 being equal to the number of groups of the first mounting portions 300, and each first connector 200 being configured to connect with a second connector of one battery 2000.

The bracket assembly 100 is a component configured to mount and support the battery 2000. In the vehicle body 1000, the bracket assembly 100 may be disposed at any position of the vehicle body 1000, for example, the bracket assembly 100 may be disposed at the back of the cab of the vehicle body 1000, the front of the vehicle body 1000, the rear of the vehicle body 1000, or the bottom of the vehicle body 1000.

In some embodiments, the bracket assembly 100 is the main structure for achieving battery swapping in the vehicle body 1000. The first mounting portions 300 are components provided on the bracket assembly 100 configured to detachably connect with the battery 2000. The first mounting portions 300 are arranged in groups, each group of first mounting portions 300 corresponding to one battery 2000, configured to detachably mount the corresponding battery 2000 on the bracket assembly 100. The bracket assembly 100 is provided with multiple groups of first mounting portions 300, that is, the bracket assembly 100 can detachably connect a corresponding number of batteries 2000 through multiple groups of first mounting portions 300 to achieve battery swapping for multiple batteries 2000. In some embodiments, the first mounting portions 300 include, but are not limited to, mounting holes, mounting threaded members, and other structures capable of achieving detachable connection with the battery 2000. In some embodiments, the number of groups of first mounting portions 300 on the bracket assembly 100 may be two, three, four, or more groups.

In some embodiments, the first connector 200 is a component configured to connect with a second connector of the battery 2000, with one first connector 200 configured to connect with the second connector of one battery 2000. In some embodiments, the first connector 200 may include, but is not limited to, a high-low voltage connector for connecting with the battery 2000 or a liquid-cooling connector for connecting with the battery 2000. In some embodiments, the high-low voltage connector may be electrically connected to the battery 2000, configured to enable input or output of the battery 2000 and input or output of electrical signals. The liquid-cooling connector may be configured for input or output of a heat exchange medium for the battery 2000 to perform thermal management of the battery 2000.

"The number of the first connectors 200 being equal to the number of groups of the first mounting portions 300" can be understood as the vehicle body 1000 being capable of on-demand battery swapping, where regardless of the number of batteries 2000 mounted on the bracket assembly 100 through the first mounting portions 300, each battery 2000 can connect with a corresponding first connector 200, enabling each battery 2000 to function normally and perform normal charging and discharging. For example, based on the driving range requirements of the vehicle 10000, it can be divided into short-range, medium-range, and long-range requirements. A short-range requirement may correspond to one battery 2000; a medium-range requirement may correspond to two batteries 2000; a long-range requirement may correspond to three batteries 2000. Therefore, the bracket assembly 100 may be provided with three groups of first mounting portions 300 to mount up to three batteries 2000, meeting the longest driving range requirement. When meeting a short-range requirement, only one battery 2000 may be mounted, with the second connector of this battery 2000 connected to one first connector 200. When meeting a medium-range requirement, only two batteries 2000 may be mounted, with the second connectors of these two batteries 2000 respectively connected to two first connectors 200. When meeting a long-range requirement, three batteries 2000 may be mounted, with the second connector of each battery 2000 connected to a corresponding first connector 200.

In the above solution, the vehicle body 1000 includes a bracket assembly 100 and multiple first connectors 200. By providing multiple first connectors 200 and multiple groups of first mounting portions 300 on the bracket assembly 100, the number of batteries 2000 to be replaced can be adjusted based on driving range requirements (that is, on-demand battery swapping; for example, when the required driving range is short, a smaller number of batteries 2000 can be mounted on a corresponding number of groups of first mounting portions 300, with the second connector of each battery 2000 connected to a corresponding first connector 200; when the required driving range is long, a larger number of batteries 2000 can be mounted on a corresponding number of groups of first mounting portions 300, with the second connector of each battery 2000 connected to a corresponding first connector 200), thereby saving the costs of additional batteries 2000 and effectively reducing battery swapping costs.

According to some embodiments of this application, the bracket assembly 100 includes a frame 20.

In some embodiments, the frame 20 may be a frame structure spanning the front and rear axles of the vehicle body 1000, commonly referred to as a main beam, serving as the base of the vehicle body 1000. The function of the frame 20 may include supporting and connecting various assemblies of the vehicle body 1000, maintaining their relatively correct positions, and bearing various loads inside and outside the vehicle body 1000.

In some embodiments, the frame 20 is located at the bottom of the vehicle body 1000.

In the above solution, the frame 20 may be provided with first mounting portions 300, which, on the one hand, can stably support the battery 2000, improving the connection stability between the battery 2000 and the vehicle body 1000 and reducing the risk of battery 2000 detachment; on the other hand, the frame 20 is located at the bottom of the vehicle body 1000, allowing the battery 2000 to be swapped from below the vehicle body 1000. Compared to the current backpack-style battery swapping for heavy trucks (where the battery 2000 is mounted on the back of the cab), this changes the positional layout of the battery 2000 in the vehicle body 1000, effectively saving space in the longitudinal direction of the vehicle 10000, thereby increasing the cargo capacity of the vehicle 10000.

According to some embodiments of this application, referring to FIG. 2 and FIG. 3, the bracket assembly 100 further includes a bracket 10, the bracket 10 being fixedly connected to the frame 20 and the bracket 10 being provided with the first mounting portions 300.

The bracket 10 is a component fixed to the frame 20. In some embodiments, the bracket 10 may be connected to the frame 20 by welding, riveting, threaded connection, or other methods. In some other embodiments, the bracket 10 may be integrally formed with the frame 20.

The bracket 10 is provided with first mounting portions 300 to support and mount the battery 2000. In some embodiments, the bracket 10 has a certain structural strength to support and mount the battery 2000. In some embodiments, the material of the bracket 10 may be the same as the material of the frame 20. In some embodiments, the material of the bracket 10 may be aluminum alloy, steel, cast iron, or reinforced plastic, and the like.

In the above solution, by fixedly connecting the bracket 10 to the frame 20, on the one hand, the impact on the structural reliability of the vehicle body 1000 due to the installation of the bracket 10 can be reduced; on the other hand, the bracket 10 can be stably disposed on the vehicle body 1000 to effectively support the battery 2000; furthermore, the bracket 10 can be retrofitted onto the frame 20 of existing vehicle bodies 1000 with low installation difficulty and high installation efficiency, enabling existing vehicles 10000 to quickly acquire on-demand battery swapping functionality.

According to some embodiments of this application, referring to FIG. 4, FIG. 4 is a front view of a bracket assembly 100 and a battery 2000 in some embodiments of this application.

The frame 20 includes a first longitudinal beam 21 and a second longitudinal beam 22, a highest point of the bracket 10 being not higher than an upper end surface of the first longitudinal beam 21 and a highest point of the bracket 10 being not higher than an upper end surface of the second longitudinal beam 22.

In some embodiments, the vehicle body 1000 may be applied to commercial trucks (for example, heavy trucks) or buses (for example, coaches), and the frame 20 may include a first longitudinal beam 21 and a second longitudinal beam 22. The first longitudinal beam 21 and the second longitudinal beam 22 may be spaced apart relatively, with the direction of their relative spacing being the width direction of the vehicle body 1000, and the extension direction of the first longitudinal beam 21 and the second longitudinal beam 22 being the longitudinal direction of the vehicle body 1000.

"A highest point of the bracket 10 being not higher than an upper end surface of the first longitudinal beam 21" can be understood as, in a height direction (the direction perpendicular to the ground, generally when the vehicle 10000 is traveling on the ground), a farthest part of the bracket 10 from the ground is not higher than a farthest part of the first longitudinal beam 21 from the ground, that is, no part of the bracket 10 protrudes beyond the first longitudinal beam 21. "A highest point of the bracket 10 being not higher than an upper end surface of the second longitudinal beam 22" can be understood as, in the height direction, the farthest part of the bracket 10 from the ground is not higher than a farthest part of the second longitudinal beam 22 from the ground, that is, no part of the bracket 10 protrudes beyond the second longitudinal beam 22.

In the above solution, the frame 20 may include the first longitudinal beam 21 and the second longitudinal beam 22 among main beams, for example, the frame 20 may include the first longitudinal beam 21 and the second longitudinal beam 22 of main beams for large vehicles 10000 (such as heavy trucks). By disposing the bracket 10 on the frame 20 without protruding above the upper end surfaces of the first longitudinal beam 21 and the second longitudinal beam 22, the space above the first longitudinal beam 21 and the second longitudinal beam 22 is not occupied, which, on the one hand, reduces interference with the interior of the vehicle body 1000 due to the installation of the bracket 10; on the other hand, for retrofitting brackets 10 onto existing vehicle bodies 1000, the reinforcement difficulty of the bracket 10 is low, and the implementation feasibility is high; furthermore, when batteries 2000 are mounted on the bracket 10 or the first longitudinal beam 21 and the second longitudinal beam 22, the batteries 2000 can be swapped from below the vehicle body 1000. Compared to the current backpack-style battery swapping for heavy trucks (where batteries 2000 are mounted on the back of the cab), this changes the positional layout of the battery 2000 in the vehicle body 1000, effectively saving space in the longitudinal direction of the vehicle 10000, thereby increasing the cargo capacity of the vehicle 10000.

According to some embodiments of this application, referring to FIG. 3 and FIG. 4, in a direction from the first longitudinal beam 21 to the second longitudinal beam 22, the bracket 10 extends beyond the second longitudinal beam 22.

In some embodiments, the direction from the first longitudinal beam 21 to the second longitudinal beam 22 may be parallel to the width direction of the vehicle body 1000, that is, perpendicular to the driving direction of the vehicle 10000.

"In a direction from the first longitudinal beam 21 to the second longitudinal beam 22, the bracket 10 extends beyond the second longitudinal beam 22" can be understood as a portion of the bracket 10 being located on a side of the second longitudinal beam 22 facing away from the first longitudinal beam 21, or as a portion of the bracket 10 being located outside the frame 20.

In the above solution, by configuring the bracket 10 to extend beyond the second longitudinal beam 22, a larger installation area can be provided for the batteries 2000, thereby allowing the swapping of more batteries 2000 or larger-sized batteries 2000 to meet different driving range requirements of different vehicles 10000 or varying driving range requirements of the vehicle 10000.

In some other embodiments, the bracket 10 may not extend beyond the second longitudinal beam 22, for example, the bracket 10 may be located between the first longitudinal beam 21 and the second longitudinal beam 22.

According to some embodiments of this application, referring to FIG. 3, a portion of the bracket 10 extending beyond the second longitudinal beam 22 is provided with at least one first mounting portion 300.

"A portion of the bracket 10 extending beyond the second longitudinal beam 22 is provided with at least one first mounting portion 300" can be understood as at least one first mounting portion 300 in a group or each group of first mounting portions 300 being provided on the portion of the bracket 10 extending beyond the second longitudinal beam 22. In some embodiments, the portion of the bracket 10 extending beyond the second longitudinal beam 22 may be provided with multiple first mounting portions 300, these multiple first mounting portions 300 being first mounting portions 300 in multiple groups of first mounting portions 300. In some embodiments, the portion of the bracket 10 extending beyond the second longitudinal beam 22 may be provided with multiple first mounting portions 300, these multiple first mounting portions 300 being first mounting portions 300 in one group of mounting portions. In some embodiments, the portion of the bracket 10 extending beyond the second longitudinal beam 22 may be provided with one first mounting portion 300, this one first mounting portion 300 being a first mounting portion 300 in one group of mounting portions. In some embodiments, one first mounting portion 300 in each group of first mounting portions 300 may be provided on the portion of the bracket 10 extending beyond the second longitudinal beam 22.

In the above solution, by providing at least one first mounting portion 300 on the portion of the bracket 10 extending beyond the second longitudinal beam 22, the portion of the battery 2000 extending beyond the second longitudinal beam 22 can be connected, enabling the battery 2000 to be stably connected to the bracket 10, thereby improving the structural stability of the battery 2000 and the bracket 10.

According to some embodiments of this application, in a direction from the second longitudinal beam 22 to the first longitudinal beam 21, the bracket 10 extends beyond the first longitudinal beam 21.

In some embodiments, the direction from the second longitudinal beam 22 to the first longitudinal beam 21 may be parallel to the width direction of the vehicle body 1000, that is, perpendicular to the driving direction of the vehicle 10000.

"In a direction from the second longitudinal beam 22 to the first longitudinal beam 21, the bracket 10 extends beyond the first longitudinal beam 21" can be understood as a portion of the bracket 10 being located on a side of the first longitudinal beam 21 facing away from the second longitudinal beam 22, or as a portion of the bracket 10 being located outside the frame 20.

In the above solution, by configuring the bracket 10 to extend beyond the first longitudinal beam 21, a larger installation area can be provided for the batteries 2000, thereby allowing the swapping of more batteries 2000 or larger-sized batteries 2000 to meet different driving range requirements of different vehicles 10000 or varying driving range requirements of the vehicle 10000.

In some other embodiments, the bracket 10 may not extend beyond the first longitudinal beam 21, for example, a portion of the bracket 10 may be located between the first longitudinal beam 21 and the second longitudinal beam 22, and a portion of the bracket 10 may extend beyond the second longitudinal beam 22.

According to some embodiments of this application, referring to FIG. 3, a portion of the bracket 10 extending beyond the first longitudinal beam 21 is provided with at least one first mounting portion 300.

"A portion of the bracket 10 extending beyond the first longitudinal beam 21 is provided with at least one first mounting portion 300" can be understood as at least one first mounting portion 300 in a group or each group of first mounting portions 300 being provided on the portion of the bracket 10 extending beyond the first longitudinal beam 21. In some embodiments, the portion of the bracket 10 extending beyond the first longitudinal beam 21 may be provided with multiple first mounting portions 300, these multiple first mounting portions 300 being first mounting portions 300 in multiple groups of first mounting portions 300. In some embodiments, the portion of the bracket 10 extending beyond the first longitudinal beam 21 may be provided with multiple first mounting portions 300, these multiple first mounting portions 300 being first mounting portions 300 in one group of mounting portions. In some embodiments, the portion of the bracket 10 extending beyond the first longitudinal beam 21 may be provided with one first mounting portion 300, this one first mounting portion 300 being a first mounting portion 300 in one group of mounting portions. In some embodiments, one first mounting portion 300 in each group of first mounting portions 300 may be provided on the portion of the bracket 10 extending beyond the first longitudinal beam 21.

In the above solution, by providing at least one first mounting portion 300 on the portion of the bracket 10 extending beyond the first longitudinal beam 21, the portion of the battery 2000 extending beyond the first longitudinal beam 21 can be connected, enabling the battery 2000 to be stably connected to the bracket 10, thereby improving the structural stability of the battery 2000 and the bracket 10.

According to some embodiments of this application, at least a portion of the bracket 10 is located between the first longitudinal beam 21 and the second longitudinal beam 22.

In some embodiments, "at least a portion of the bracket 10 is located between the first longitudinal beam 21 and the second longitudinal beam 22" can be understood as a portion of the bracket 10 being located between the first longitudinal beam 21 and the second longitudinal beam 22, that is, a portion of the bracket 10 may also be outside the first longitudinal beam 21 and/or the second longitudinal beam 22; it can also be understood as the entire bracket 10 being located between the first longitudinal beam 21 and the second longitudinal beam 22.

In the above solution, a center of gravity of the vehicle body 1000 may be located between the first longitudinal beam 21 and the second longitudinal beam 22. Thus, on the one hand, by disposing at least a portion of the bracket 10 between the first longitudinal beam 21 and the second longitudinal beam 22, the impact on the center of gravity position of the vehicle body 1000 due to the installation of the bracket 10 can be reduced, improving the driving stability of the vehicle body 1000; on the other hand, when the battery 2000 is mounted on the bracket 10, since a portion of the battery 2000 or some batteries 2000 can be located between the first longitudinal beam 21 and the second longitudinal beam 22, the impact on the center of gravity position of the vehicle body 1000 due to battery installation can be reduced, improving the driving stability of the vehicle body 1000.

In some other embodiments, the bracket 10 may not be located between the first longitudinal beam 21 and the second longitudinal beam 22, for example, the bracket 10 may be disposed on the side of the first longitudinal beam 21 facing away from the second longitudinal beam 22, or the bracket 10 may be disposed on the side of the second longitudinal beam 22 facing away from the first longitudinal beam 21, or the number of brackets 10 may be two, with one bracket 10 disposed on the side of the first longitudinal beam 21 facing away from the second longitudinal beam 22 and the other bracket 10 disposed on the side of the second longitudinal beam 22 facing away from the first longitudinal beam 21.

According to some embodiments of this application, referring to FIG. 2, a portion of the bracket 10 located between the first longitudinal beam 21 and the second longitudinal beam 22 is provided with at least one first mounting portion 300.

In some embodiments, the number of first mounting portions 300 provided on the portion of the bracket located between the first longitudinal beam 21 and the second longitudinal beam 22 may be one, two, three, or more.

"A portion of the bracket 10 located between the first longitudinal beam 21 and the second longitudinal beam 22 is provided with at least one first mounting portion 300" can be understood as at least one first mounting portion 300 in a group or each group of first mounting portions 300 being provided on the portion of the bracket 10 located between the first longitudinal beam 21 and the second longitudinal beam 22. In some embodiments, the portion of the bracket 10 located between the first longitudinal beam 21 and the second longitudinal beam 22 may be provided with multiple first mounting portions 300, these multiple first mounting portions 300 being first mounting portions 300 in multiple groups of first mounting portions 300. In some embodiments, the portion of the bracket 10 located between the first longitudinal beam 21 and the second longitudinal beam 22 may be provided with multiple first mounting portions 300, these multiple first mounting portions 300 being first mounting portions 300 in one group of mounting portions. In some embodiments, the portion of the bracket 10 located between the first longitudinal beam 21 and the second longitudinal beam 22 may be provided with one first mounting portion 300, this one first mounting portion 300 being a first mounting portion 300 in one group of mounting portions. In some embodiments, one first mounting portion 300 in each group of first mounting portions 300 may be provided on the portion of the bracket 10 located between the first longitudinal beam 21 and the second longitudinal beam 22.

In the above solution, by providing at least one first mounting portion 300 on the portion of the bracket 10 located between the first longitudinal beam 21 and the second longitudinal beam 22, the portion of the battery 2000 located between the first longitudinal beam 21 and the second longitudinal beam 22 can be connected, enabling the battery 2000 to be stably connected to the bracket 10, thereby improving the structural stability of the battery 2000 and the bracket 10.

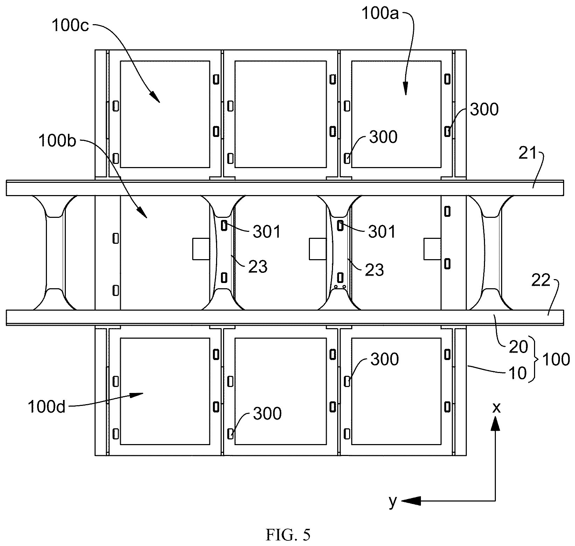

According to some other embodiments of this application, referring to FIG. 5, FIG. 5 is a schematic diagram of a bracket assembly 100 in some other embodiments of this application.

The frame 20 is provided with a second mounting portion 301, the second mounting portion 301 being configured to detachably connect a battery 2000.

The second mounting portion 301 is a component provided on the frame 20 configured to detachably connect with the battery 2000. In some embodiments, the second mounting portions 301 include, but are not limited to, mounting holes, mounting threaded members, and other structures capable of achieving detachable connection with the battery 2000. In some embodiments, the second mounting portions 301 may have the same structure as the first mounting portions 300.

In some embodiments, the frame 20 may be provided with multiple groups of second mounting portions 301, the number of groups of the second mounting portions 301 corresponding to the number of groups of the first mounting portions 300, enabling each battery 2000 to be connected by a group of first mounting portions 300 and a group of second mounting portions 301.

In the above solution, by providing second mounting portions 301 on the frame 20, which cooperate with the first mounting portions 300 to detachably connect the battery 2000, the connection stability between the battery 2000 and the vehicle body 1000 can be improved, enhancing the driving reliability of the vehicle body 1000.

According to some embodiments of this application, the frame 20 includes the first longitudinal beam 21 and the second longitudinal beam 22, the second mounting portion 301 being provided on the first longitudinal beam 21 and/or the second longitudinal beam 22.

In some embodiments, the vehicle body 1000 may be applied to commercial trucks (for example, heavy trucks) or buses (for example, coaches), and the frame 20 may include the first longitudinal beam 21 and the second longitudinal beam 22.

In some embodiments, the second mounting portion 301 may be provided on the first longitudinal beam 21. In some embodiments, the second mounting portion 301 may be provided on the second longitudinal beam 22. In some embodiments, the second mounting portion 301 may be provided on both the first longitudinal beam 21 and the second longitudinal beam 22.

In the above solution, the frame 20 may include the first longitudinal beam 21 and the second longitudinal beam 22 among main beams, for example, the frame 20 may include the first longitudinal beam 21 and the second longitudinal beam 22 of main beams for large vehicles 10000 (such as heavy trucks). The second mounting portions 301 provided on the first longitudinal beam 21 and/or the second longitudinal beam 22 can effectively cooperate with the first mounting portions 300, enabling the battery 2000 to be effectively connected to the vehicle body 1000, reducing the risk of battery 2000 detachment, and improving the driving reliability of the vehicle body 1000.

According to some embodiments of this application, the frame 20 includes the first longitudinal beam 21, the second longitudinal beam 22, and a crossbeam 23, the crossbeam 23 being connected between the first longitudinal beam 21 and the second longitudinal beam 22 and the second mounting portion 301 being provided on the crossbeam 23.

In some embodiments, the first longitudinal beam 21 and the second longitudinal beam 22 are spaced apart relatively, and the crossbeam 23 is located in the gap formed by the spacing between the first longitudinal beam 21 and the second longitudinal beam 22, with the crossbeam 23 connecting the first longitudinal beam 21 and the second longitudinal beam 22. The crossbeam 23 can improve the structural strength of the frame 20, enabling the frame 20 to effectively bear various loads inside and outside the vehicle body 1000.

In the above solution, the frame 20 may include the first longitudinal beam 21, the second longitudinal beam 22, and the crossbeam 23 among main beams, for example, the frame 20 may include the first longitudinal beam 21, the second longitudinal beam 22, and the crossbeam 23 of main beams for large vehicles 10000 (such as heavy trucks). On the one hand, the second mounting portions 301 provided on the crossbeam 23 can effectively cooperate with the first mounting portions 300, enabling the battery 2000 to be effectively connected to the vehicle body 1000, reducing the risk of battery 2000 detachment, and improving the driving reliability of the vehicle body 1000; on the other hand, since the crossbeam 23 is located in the gap formed between the first longitudinal beam 21 and the second longitudinal beam 22, providing the second mounting portions 301 on the crossbeam 23 can make reasonable use of the space between the first longitudinal beam 21 and the second longitudinal beam 22, reducing interference of the second mounting portions 301 with the bracket 10 and improving the battery swapping efficiency of the vehicle body 1000.

According to some embodiments of this application, referring to FIG. 2 and FIG. 3, the bracket assembly 100 has multiple accommodation spaces 100a, the multiple accommodation spaces 100a being arranged along a first direction, each accommodation space 100a being configured to accommodate one battery 2000, and each accommodation space 100a being correspondingly provided with a group of the first mounting portions 300.

In some embodiments, the bracket assembly 100 has multiple accommodation spaces 100a arranged along the first direction, the multiple accommodation spaces 100a being independent of each other. Each accommodation space 100a can be configured to accommodate one battery 2000, and the battery 2000 located in the accommodation space 100a can be connected by a group of first mounting portions 300 in the accommodation space 100a.

The arrangement of multiple accommodation spaces 100a along the first direction can be understood as multiple batteries 2000 being arranged along the first direction.

In some embodiments, the dimensions of the accommodation spaces 100a may be the same, enabling the bracket assembly 100 to accommodate multiple batteries 2000 of the same specification. In some other embodiments, the dimensions of the accommodation spaces 100a may be different, enabling the bracket assembly 100 to accommodate multiple batteries 2000 of different specifications.

In the above solution, by providing multiple accommodation spaces 100a along the first direction, with each accommodation space 100a correspondingly provided with a group of first mounting portions 300, each battery 2000 can be orderly installed in a corresponding accommodation space 100a, with batteries 2000 not interfering with each other, thereby improving the battery swapping efficiency of the vehicle body 1000.

According to some embodiments of this application, referring to FIG. 3, the accommodation space 100a has a downwardly open opening, the opening being configured to allow the battery 2000 to enter or exit the accommodation space 100a.

"The accommodation space 100a has a downwardly open opening" can be understood as the accommodation space 100a having an opening facing the ground, for example, when the vehicle 10000 is supported on the ground, the opening of the accommodation space 100a faces the ground.

In some embodiments, the battery 2000 can enter or exit the accommodation space 100a through the opening.

In some embodiments, a battery swapping station may be provided with a trench, and a battery swapping mechanism may be disposed in the trench. When the vehicle body is in the battery swapping position, the trench can be located below the vehicle body, and the battery 2000 can enter or exit the accommodation space 100a through the battery swapping mechanism in the trench.

In the above solution, by providing a downwardly open opening, it is convenient for the battery 2000 to enter or exit the accommodation space 100a from below the vehicle body 1000. Compared to the current backpack-style battery swapping for heavy trucks, on the one hand, this saves space above the frame 20, reducing the risk of damage to the vehicle body 1000 due to interference from the battery swapping mechanism occupying space above the frame 20; on the other hand, it changes the positional layout of the battery 2000 in the vehicle body 1000, effectively saving space in the longitudinal direction of the vehicle 10000, thereby increasing the cargo capacity of the vehicle 10000.

According to some embodiments of this application, referring to FIG. 3, the first direction is parallel to a longitudinal direction y of the frame.

The first direction is the arrangement direction of the accommodation spaces 100a, which can also be understood as the arrangement direction of the batteries 2000.

The longitudinal direction y of the frame may be the extension direction of the longitudinal beams in the frame 20, and the longitudinal direction y of the frame may also be the driving direction of the vehicle 10000.

In some embodiments, referring to FIG. 3, the battery 2000 may be elongated, and when the first direction is parallel to the longitudinal direction y of the frame, the length direction of the battery 2000 may be perpendicular to the first direction, that is, the length direction of the battery 2000 may be parallel to the lateral direction x of the frame. The lateral direction x of the frame may be the arrangement direction of a pair of longitudinal beams in the frame 20, and the lateral direction x of the frame may also be the width direction of the vehicle 10000. Referring to FIG. 3, three batteries 2000 are arranged along the longitudinal direction y of the frame.

In the above solution, the longitudinal direction y of the frame may be parallel to the driving direction of the vehicle body 1000, and the longitudinal direction y of the frame may be the extension direction of the longitudinal beams in the frame 20. By setting the first direction to be parallel to the longitudinal direction y of the frame, that is, arranging multiple batteries 2000 along the longitudinal direction y of the frame, the center of gravity of the batteries 2000 can be brought closer to the center in the lateral direction x of the frame, reducing the impact of battery installation on the center of gravity position of the vehicle body 1000, thereby providing the vehicle body 1000 with higher driving reliability.

According to some embodiments of this application, referring to FIG. 2, the frame 20 includes the first longitudinal beam 21 and the second longitudinal beam 22, each accommodation space 100a being divided by the first longitudinal beam 21 and the second longitudinal beam 22 into a first subspace 100b, a second subspace 100c, and a third subspace 100d, the first subspace 100b being located between the first longitudinal beam 21 and the second longitudinal beam 22, the second subspace 100c being located on a side of the first longitudinal beam 21 facing away from the second longitudinal beam 22, and the third subspace 100d being located on a side of the second longitudinal beam 22 facing away from the first longitudinal beam 21.

In some embodiments, the vehicle body 1000 may be applied to commercial trucks (for example, heavy trucks) or buses (for example, coaches), and the frame 20 may include the first longitudinal beam 21 and the second longitudinal beam 22. The first longitudinal beam 21 and the second longitudinal beam 22 may be spaced apart relatively, with the direction of their relative spacing being the width direction of the vehicle body 1000, which may also be the lateral direction x of the frame, and the extension direction of the first longitudinal beam 21 and the second longitudinal beam 22 may be the longitudinal direction of the vehicle body 1000.

In some embodiments, the accommodation space 100a is divided by the first longitudinal beam 21 and the second longitudinal beam 22 into three subspaces, including the first subspace 100b, the second subspace 100c, and the second subspace 100c. Each subspace can accommodate a portion of the battery 2000.

In some embodiments, the first subspace 100b is located between the first longitudinal beam 21 and the second longitudinal beam 22, and the second subspace 100c and the third subspace 100d may be symmetrically arranged based on the center of the first subspace 100b.

In some embodiments, the dimensions of the second subspace 100c and the third subspace 100d may be the same or different; when the dimensions of the second subspace 100c and the third subspace 100d are the same, it can be understood that the volume of the portion of the battery 2000 in the second subspace 100c may be equal to the volume of the portion of the battery 2000 in the third subspace 100d. In some embodiments, the dimensions of the first subspace 100b, the second subspace 100c, and the third subspace 100d may be the same or different.

In the above solution, the frame 20 may include the first longitudinal beam 21 and the second longitudinal beam 22 among main beams, for example, the frame 20 may include the first longitudinal beam 21 and the second longitudinal beam 22 of main beams for large vehicles 10000 (such as heavy trucks). By dividing the accommodation space 100a into the first subspace 100b, the second subspace 100c, and the third subspace 100d based on the first longitudinal beam 21 and the second longitudinal beam 22, the weight of the battery 2000 can be evenly distributed based on the positions of the first longitudinal beam 21 and the second longitudinal beam 22, reducing the impact of battery installation on the center of gravity position of the vehicle body 1000, thereby providing the vehicle body 1000 with higher driving reliability.

According to some embodiments of this application, referring to FIG. 2, the first subspace 100b is correspondingly provided with at least one first mounting portion 300, the second subspace 100c is correspondingly provided with at least one first mounting portion 300, and the third subspace 100d is correspondingly provided with at least one first mounting portion 300.

Each accommodation space 100a is provided with a group of first mounting portions 300. "The first subspace 100b is correspondingly provided with at least one first mounting portion 300, the second subspace 100c is correspondingly provided with at least one first mounting portion 300, and the third subspace 100d is correspondingly provided with at least one first mounting portion 300" can be understood as the portions of the battery 2000 located in the first subspace 100b, the second subspace 100c, and the third subspace 100d being able to connect with corresponding first mounting portions 300, respectively.

In some embodiments, the first subspace 100b may be correspondingly provided with one, two, three, or more first mounting portions 300. The second subspace 100c may be correspondingly provided with one, two, three, or more first mounting portions 300. The third subspace 100d may be correspondingly provided with one, two, three, or more first mounting portions 300.

In the above solution, by distributing at least one first mounting portion 300 in the first subspace 100b, the second subspace 100c, and the third subspace 100d, the battery 2000 can be effectively connected, enabling the battery 2000 to be stably mounted on the vehicle body 1000, reducing the risk of battery 2000 detachment, and providing the vehicle body 1000 with higher driving reliability.

According to some embodiments of this application, referring to FIG. 3, at least two first mounting portions 300 are provided in the first subspace 100b, at least two first mounting portions 300 are provided in the second subspace 100c, and at least two first mounting portions 300 are provided in the third subspace 100d.

"At least two first mounting portions 300 are provided in the first subspace 100b, at least two first mounting portions 300 are provided in the second subspace 100c, and at least two first mounting portions 300 are provided in the third subspace 100d" can be understood as each subspace in the accommodation space 100a being provided with at least two first mounting portions 300, that is, a group of first mounting portions 300 including at least six first mounting portions 300.

In some embodiments, referring to FIG. 3, four first mounting portions 300 are provided in the first subspace 100b, and these four first mounting portions 300 may be correspondingly provided on both sides of the battery 2000 in the width direction to collectively connect the portion of the battery 2000 in the first subspace 100b. Four first mounting portions 300 are provided in the second subspace 100c, and these four first mounting portions 300 may be correspondingly provided on both sides of the battery 2000 in the width direction to collectively connect the portion of the battery 2000 in the second subspace 100c. Four first mounting portions 300 are provided in the third subspace 100d, and these four first mounting portions 300 may be correspondingly provided on both sides of the battery 2000 in the width direction to collectively connect the portion of the battery 2000 in the third subspace 100d.

In the above solution, by distributing at least two first mounting portions 300 in the first subspace 100b, the second subspace 100c, and the third subspace 100d, that is, providing at least six first mounting portions 300 in the accommodation space 100a, with the six first mounting portions 300 arranged according to the first subspace 100b, the second subspace 100c, and the third subspace 100d, the battery 2000 can be uniformly connected, enabling the battery 2000 to be stably positioned in the accommodation space 100a, reducing the risk of battery 2000 detachment, and providing the vehicle body 1000 with higher driving reliability.

According to some embodiments of this application, referring to FIG. 2, at least two first mounting portions 300 in the first subspace 100b are respectively disposed on opposite sides of the first subspace 100b along the longitudinal direction y of the frame; and/or, at least two first mounting portions 300 in the second subspace 100c are respectively disposed on opposite sides of the second subspace 100c along the longitudinal direction y of the frame; and/or, at least two first mounting portions 300 in the third subspace 100d are respectively disposed on opposite sides of the third subspace 100d along the longitudinal direction y of the frame.

In some embodiments, along the longitudinal direction y of the frame (which may also be along the arrangement direction of multiple batteries 2000), multiple first mounting portions 300 in the first subspace 100b are disposed on both sides of the first subspace 100b to connect with portions of the battery 2000 on both sides in the longitudinal direction y of the frame.

In some embodiments, along the longitudinal direction y of the frame, which may also be along the arrangement direction of multiple batteries 2000, multiple first mounting portions 300 in the second subspace 100c are disposed on both sides of the second subspace 100c to connect with portions of the battery 2000 on both sides in the longitudinal direction y of the frame.

In some embodiments, along the longitudinal direction y of the frame, which may also be along the arrangement direction of multiple batteries 2000, multiple first mounting portions 300 in the third subspace 100d are disposed on both sides of the third subspace 100d to connect with portions of the battery 2000 on both sides in the longitudinal direction y of the frame.

In the above solution, by disposing at least two first mounting portions 300 in the first subspace 100b on opposite sides of the first subspace 100b along the longitudinal direction of the frame 20, the battery 2000 can be constrained and connected on both sides in the longitudinal direction of the frame 20, ensuring uniform force distribution and reducing the risk of battery 2000 detachment; similarly, by disposing at least two first mounting portions 300 in the second subspace 100c on opposite sides of the second subspace 100c along the longitudinal direction of the frame 20, the battery 2000 can be constrained and connected on both sides in the longitudinal direction of the frame 20, ensuring uniform force distribution and reducing the risk of battery 2000 detachment; similarly, by disposing at least two first mounting portions 300 in the third subspace 100d on opposite sides of the third subspace 100d along the longitudinal direction of the frame 20, the battery 2000 can be constrained and connected on both sides in the longitudinal direction of the frame 20, ensuring uniform force distribution and reducing the risk of battery 2000 detachment, thereby providing the vehicle body 1000 with higher driving reliability.

In some other embodiments, at least two first mounting portions 300 in the first subspace 100b may be disposed on the same side of the first subspace 100b. In some embodiments, at least two first mounting portions 300 in the second subspace 100c may be disposed on the same side of the second subspace 100c. In some embodiments, at least two first mounting portions 300 in the third subspace 100d may be disposed on the same side of the third subspace 100d.

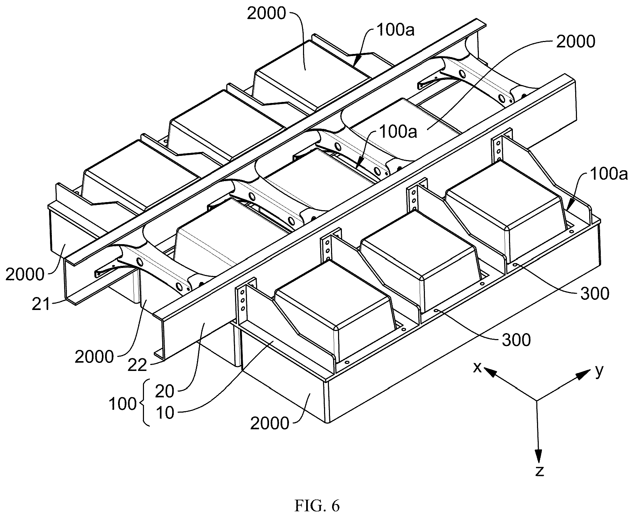

According to some other embodiments of this application, referring to FIG. 6, FIG. 6 is a schematic diagram of a bracket assembly 100 and a battery 2000 in some other embodiments of this application. The first direction is parallel to a lateral direction x of the frame.

The first direction is the arrangement direction of the accommodation spaces 100a, which can also be understood as the arrangement direction of the batteries 2000.

The lateral direction x of the frame may be the arrangement direction of a pair of longitudinal beams in the frame 20, and the lateral direction x of the frame may also be the width direction of the vehicle 10000. In some embodiments, referring to FIG. 6, the battery 2000 may be elongated, and when the first direction is parallel to the lateral direction x of the frame, the length direction of the battery 2000 may be perpendicular to the first direction, that is, the length direction of the battery 2000 may be parallel to the longitudinal direction y of the frame. The longitudinal direction y of the frame may be the extension direction of the longitudinal beams in the frame 20, and the longitudinal direction y of the frame may also be the driving direction of the vehicle 10000. Referring to FIG. 6, three batteries 2000 are arranged along the lateral direction x of the frame.

In the above solution, the lateral direction x of the frame may be perpendicular to the driving direction of the vehicle body 1000, the lateral direction x of the frame may be the arrangement direction of a pair of longitudinal beams in the frame 20, and the lateral direction x of the frame may also be understood as the width direction of the vehicle body 1000. By setting the first direction to be parallel to the lateral direction x of the frame, that is, arranging multiple batteries 2000 along the lateral direction x of the frame, battery swapping can be performed along the width direction of the vehicle body 1000, which, compared to swapping batteries along the longitudinal direction of the vehicle body 1000, can effectively reduce the movement path of the battery, thereby improving battery swapping efficiency.

According to some other embodiments of this application, the frame 20 includes the first longitudinal beam 21 and the second longitudinal beam 22, the number of accommodation spaces 100a being at least two, at least one accommodation space 100a being located on a side of the first longitudinal beam 21 facing away from the second longitudinal beam 22, and at least one accommodation space 100a being located on a side of the second longitudinal beam 22 facing away from the first longitudinal beam 21.

In some embodiments, the vehicle body 1000 may be applied to commercial trucks (for example, heavy trucks) or buses (for example, coaches), and the frame 20 may include the first longitudinal beam 21 and the second longitudinal beam 22. The first longitudinal beam 21 and the second longitudinal beam 22 may be spaced apart relatively, with the direction of their relative spacing being the width direction of the vehicle body 1000, which may also be the lateral direction x of the frame, and the extension direction of the first longitudinal beam 21 and the second longitudinal beam 22 may be the longitudinal direction of the vehicle body 1000.

In some embodiments, the number of accommodation spaces 100a may be two or more. Some accommodation spaces 100a may be arranged on the side of the first longitudinal beam 21 facing away from the second longitudinal beam 22, and other accommodation spaces 100a may be arranged on the side of the second longitudinal beam 22 facing away from the first longitudinal beam 21.

In the above solution, the frame 20 may include the first longitudinal beam 21 and the second longitudinal beam 22 among main beams, for example, the frame 20 may include the first longitudinal beam 21 and the second longitudinal beam 22 of main beams for large vehicles 10000 (such as heavy trucks). By providing accommodation spaces 100a on the side of the first longitudinal beam 21 facing away from the second longitudinal beam 22 and on the side of the second longitudinal beam 22 facing away from the first longitudinal beam 21, that is, arranging batteries 2000 on both sides of the frame 20, the impact of battery installation on the center of gravity position of the vehicle body 1000 can be reduced, providing the vehicle body 1000 with higher driving reliability.

According to some embodiments of this application, referring to FIG. 6, the number of accommodation spaces 100a is at least three, at least one accommodation space 100a being located between the first longitudinal beam 21 and the second longitudinal beam 22.

The number of accommodation spaces 100a is at least three, that is, the bracket 10 can mount at least three batteries 2000. At least one accommodation space 100a is located between the first longitudinal beam 21 and the second longitudinal beam 22, that is, at least one battery 2000 can be located between the first longitudinal beam 21 and the second longitudinal beam 22.

In the above solution, by arranging batteries 2000 between the first longitudinal beam 21 and the second longitudinal beam 22, the impact of battery installation on the center of gravity position of the vehicle body 1000 can be reduced, providing the vehicle body 1000 with higher driving reliability.

According to some embodiments of this application, referring to FIG. 2 and FIG. 6, the first mounting portion 300 is provided at at least one end of the accommodation space 100a along the first direction.

"The first mounting portion 300 is provided at at least one end of the accommodation space 100a along the first direction" can be understood as one end of the accommodation space 100a being provided with a first mounting portion 300 in the first direction, or both opposite ends of the accommodation space 100a being respectively provided with first mounting portions 300.

In the above solution, by providing the first mounting portion 300 at at least one end of the accommodation space 100a along the first direction, the battery 2000 can be effectively constrained and connected in the first direction, reducing the risk of battery 2000 detachment and improving the driving reliability of the vehicle body 1000.

According to some embodiments of this application, referring to FIG. 2, the first mounting portions 300 are provided at opposite ends of the accommodation space 100a along the first direction.

In the first direction, both opposite ends of the accommodation space 100a are provided with first mounting portions 300. In some embodiments, the number of first mounting portions 300 provided at opposite ends of the accommodation space 100a may be the same or different.

In the above solution, by providing the first mounting portions 300 at opposite ends of the accommodation space 100a along the first direction, the battery 2000 can be effectively constrained and connected in the first direction, ensuring uniform force distribution, reducing the risk of battery 2000 detachment, and improving the driving reliability of the vehicle body 1000.

According to some embodiments of this application, referring to FIG. 2, the accommodation space 100a has a first end and a second end opposite to each other along the first direction, the first mounting portion 300 provided at the first end being offset from the first mounting portion 300 provided at the second end.

The first end and the second end are two opposite portions of the accommodation space 100a in the first direction. In some embodiments, the first end and the second end correspond to two opposite edges of the battery in the first direction.

"The first mounting portion 300 provided at the first end being offset from the first mounting portion 300 provided at the second end" can be understood as, along the first direction, a projection of the first mounting portion 300 provided at the first end does not overlap with a projection of the first mounting portion 300 provided at the second end. It can also be understood as translating the first mounting portion 300 provided at the first end along the first direction to the second end will not interfere with the first mounting portion 300 provided at the second end.

In the above solution, by offsetting the first mounting portions 300 at opposite ends of the accommodation space 100a, on the one hand, it provides a foolproof effect for the installation of the battery 2000, reducing the risk of incorrect battery 2000 installation; on the other hand, it provides a visual foolproof effect for the installation of the bracket 10, reducing the risk of incorrect bracket 10 installation.

According to some embodiments of this application, the first mounting portions 300 at two ends of two adjacent accommodation spaces 100a that are close to each other are offset.

"The first mounting portions 300 at two ends of two adjacent accommodation spaces 100a that are close to each other are offset" can be understood as the first mounting portions 300 corresponding to the portions of two adjacent batteries 2000 in two adjacent accommodation spaces 100a that are close to each other being offset. Referring to FIG. 2, translating the first mounting portion 300 at the end of one accommodation space 100a close to the other accommodation space 100a along the first direction to the end of the other accommodation space 100a close to the one accommodation space 100a will not interfere with the first mounting portion 300 originally provided at the end of the other accommodation space 100a close to the one accommodation space 100a. That is, the first mounting portions 300 at two ends of two adjacent accommodation spaces 100a that are close to each other are not only spaced apart in the first direction but also have a distance in the direction perpendicular to the first direction.

In the above solution, during battery swapping, multiple battery swapping actuators (for example, swapping heads) can simultaneously act on the connection points between multiple first mounting portions 300 and the battery 2000. Since two adjacent accommodation spaces 100a are close to each other in the first direction, by offsetting the first mounting portions 300 at two ends of two adjacent accommodation spaces 100a that are close to each other, the risk of interference between adjacent battery swapping actuators can be reduced, enabling multiple battery swapping actuators to operate simultaneously, thereby improving battery swapping efficiency.

According to some embodiments of this application, referring to FIG. 2 and FIG. 3, a dimension of the accommodation space 100a along the first direction is smaller than a dimension of the accommodation space 100a along a second direction, the first direction, the second direction, and a gravity direction z being mutually perpendicular.

The first direction may be the arrangement direction of multiple accommodation spaces 100a, and the second direction may be a direction perpendicular to the first direction and perpendicular to the gravity direction z. In some embodiments, when the first direction is the longitudinal direction y of the frame, the second direction may be the lateral direction x of the frame. When the first direction is the lateral direction x of the frame, the second direction may be the longitudinal direction y of the frame.

In some embodiments, the accommodation space 100a may be a rectangular space, with the dimension of the accommodation space 100a in the first direction being smaller than the dimension of the accommodation space 100a in the second direction, and the accommodation space 100a can accommodate an elongated or rectangular battery 2000, with the dimension of the battery 2000 in the first direction being smaller than the dimension of the battery 2000 in the second direction.

In the above solution, the dimension of the accommodation space 100a along the first direction being smaller than the dimension of the accommodation space 100a along the second direction can be understood as the dimension of a battery cell accommodated in the accommodation space 100a along the first direction being smaller than the dimension of the battery cell along the second direction, that is, the dimension of the battery 2000 along the second direction can be the length of the battery 2000. Therefore, when the first mounting portions 300 are provided at at least one end of the accommodation space 100a along the first direction, it can be understood that the first mounting portions 300 correspond to the sides of the shorter dimension of the battery 2000, which, compared to corresponding to the sides of the longer dimension of the battery 2000, can reduce the risk of the battery 2000 sagging downward in the middle due to gravity, thereby improving the connection stability between the battery 2000 and the bracket 10.

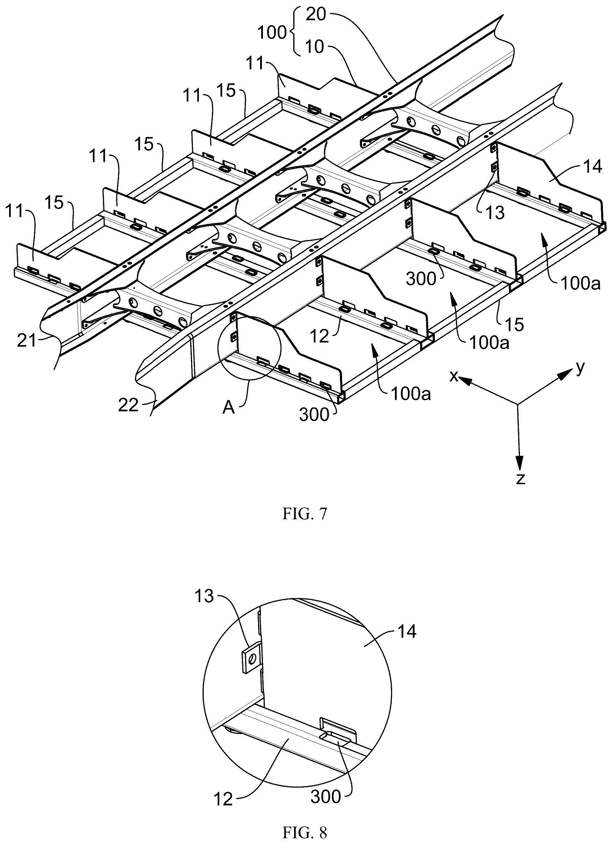

According to some embodiments of this application, referring to FIG. 7 and FIG. 8, FIG. 7 is a schematic diagram of a frame 20 and a bracket 10 in some embodiments of this application, and FIG. 8 is an enlarged view of portion A in FIG. 7.

The frame 20 includes a pair of longitudinal beams and the bracket 10 includes at least one mounting unit 11, each mounting unit 11 including a mounting beam 12 and a connecting portion 13 and the mounting beam 12 extending along the lateral direction x of the frame; along the lateral direction x of the frame, the connecting portion 13 is connected to an outer side surface of the longitudinal beam; the mounting beam 12 is connected to the connecting portion 13; and the mounting beam 12 is provided with the first mounting portion 300.

In some embodiments, the vehicle body 1000 may be applied to commercial trucks (for example, heavy trucks) or buses (for example, coaches), and the frame 20 may include a pair of relatively spaced longitudinal beams (the longitudinal beams may be the first longitudinal beam 21 and the second longitudinal beam 22). The lateral direction x of the frame may be the arrangement direction of the pair of longitudinal beams, and in some embodiments, the lateral direction x of the frame may be the width direction of the vehicle 10000. The longitudinal direction y of the frame may be the extension direction of the longitudinal beams, and in some embodiments, the lateral direction x of the frame may be the longitudinal direction or driving direction of the vehicle 10000.

The mounting unit 11 is a unit of the bracket 10 configured to mount the battery 2000. The mounting unit 11 includes a mounting beam 12 and a connecting portion 13. The connecting portion 13 is connected to an outer side surface of the longitudinal beam. The side of the longitudinal beam facing the other longitudinal beam may be an inner side surface, and the side of the longitudinal beam facing away from the other longitudinal beam may be the outer side surface. In some embodiments, the connecting portion 13 may be connected to the outer side surface of the longitudinal beam by welding, threaded connection, or other connection methods.

The mounting beam 12 is a beam structure, which may be rod-shaped, referring to FIG. 7, and the mounting beam 12 may extend along the lateral direction x of the frame. In some embodiments, the mounting beam 12 may be located outside the frame 20. In some embodiments, the mounting beam 12 may be located between a pair of longitudinal beams of the frame 20. In some embodiments, a portion of the mounting beam 12 may be located between the pair of longitudinal beams of the frame 20, and a portion of the mounting beam 12 may be outside one of the longitudinal beams. In some embodiments, a portion of the mounting beam 12 may be located between the pair of longitudinal beams of the frame 20, and portions of the mounting beam 12 may be on both sides of the frame 20 along the lateral direction x of the frame.

The mounting beam 12 may be connected to the frame 20.

The mounting beam 12 is directly or indirectly connected to the connecting portion 13, enabling the mounting beam 12 to be connected to the frame 20. In some embodiments, the mounting beam 12 may be connected to the connecting portion 13 by welding, riveting, threaded connection, or other connection methods. In some embodiments, the mounting beam 12 may be integrally formed with the connecting portion 13.

The mounting beam 12 is provided with the first mounting portion 300, which can be understood as the first mounting portion 300 on the bracket assembly 100 being provided on the mounting beam 12, and the mounting beam 12 supports the battery 2000 through the first mounting portion 300. In some embodiments, the mounting beam 12 may be connected to the frame 20, for example, the mounting beam 12 may be connected to the frame 20 by welding, threaded connection, or other connection methods.

In some embodiments, the mounting unit 11 may be configured to detachably connect the battery 2000, and the battery 2000 may be located on both sides of the mounting unit 11, for example, on both sides of the mounting unit 11. In some embodiments, the mounting unit 11 may cooperate with the first mounting portions 300 on the frame 20 to collectively support the battery 2000.

In the above solution, the frame 20 may include a pair of longitudinal beams among main beams, for example, the frame 20 may include a pair of longitudinal beams of main beams for large vehicles 10000 (such as heavy trucks). By providing the connecting portion 13, the mounting beam 12 can be effectively connected to the longitudinal beam, enabling the mounting beam 12 to effectively support the battery 2000 through the first mounting portion 300, reducing the risk of battery 2000 detachment and improving the driving reliability of the vehicle body 1000.

According to some embodiments of this application, the connecting portion 13 extends along the gravity direction z.

In some embodiments, the gravity direction z is perpendicular to the longitudinal direction y of the frame and the lateral direction x of the frame.

"The connecting portion 13 extends along the gravity direction z" can be understood as the connecting portion 13 having a surface parallel to the gravity direction z, which can be attached to the outer side surface of the longitudinal beam.

In the above solution, by configuring the connecting portion 13 to extend along the gravity direction z, the connecting portion 13 has a larger area connected to the longitudinal beam in the gravity direction z, thereby improving the connection stability between the mounting beam 12 and the longitudinal beam, reducing the risk of battery 2000 detachment, and improving the driving reliability of the vehicle body 1000.

According to some embodiments of this application, referring to FIG. 7 and FIG. 8, the mounting unit 11 further includes a rib plate 14, along the lateral direction x of the frame, the rib plate 14 being located outside the frame 20 and the rib plate 14 connecting the connecting portion 13 and the mounting beam 12.

The rib plate 14 is a component connecting the connecting portion 13 and the mounting beam 12. In some embodiments, the rib plate 14 may be a component configured to enhance the structural strength of the connecting portion 13, the mounting beam 12, and the longitudinal beam. In some embodiments, the rib plate 14 may be a reinforcement rib, reinforcement beam, or reinforcement plate disposed between the connecting portion 13 and the mounting beam 12.

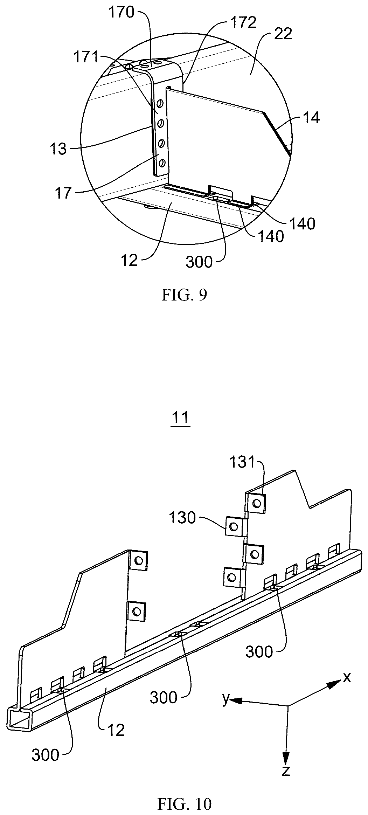

In some embodiments, the rib plate 14 may be connected to the connecting portion 13 by welding, threaded connection, or other connection methods. Alternatively, in some embodiments, the rib plate 14 may be integrally formed with the connecting portion 13. In some embodiments, the rib plate 14 may be connected to the mounting beam 12 by welding, threaded connection, or other connection methods. In some embodiments, referring to FIG. 9, FIG. 9 is a schematic diagram of a partial structure of a connecting portion 13, a mounting beam 12, a rib plate 14, and a longitudinal beam in some embodiments of this application. The rib plate 14 may be plate-shaped, formed by two plate-shaped structural members attached to each other, with the two plate-shaped structural members forming flanges 140 at the end facing the mounting beam 12, and the flanges 140 of the two plate-shaped structural members being folded in opposite directions to collectively connect to the mounting beam 12 by welding or threaded connection.

In the above solution, by providing a rib plate 14 outside the frame 20, on the one hand, the space between the connecting portion 13 and the mounting beam 12 can be reasonably utilized; on the other hand, the structural strength of the connecting portion 13 and the mounting beam 12 can be improved, reducing the risk of battery 2000 detachment and improving the driving reliability of the vehicle body 1000.

In some embodiments, the end surface of the rib plate 14 facing the mounting beam 12 is formed with a notch, the notch corresponding to the first mounting portion 300 on the mounting beam 12, the notch being configured to avoid the first mounting portion 300 to reduce interference by the rib plate 14 with the connection point between the battery 2000 and the first mounting portion 300.

According to some embodiments of this application, referring to FIG. 10, FIG. 10 is a schematic diagram of a mounting unit 11 in some embodiments of this application. The connecting portion 13 includes a first sub-connecting portion 130 and a second sub-connecting portion 131, the first sub-connecting portion 130 and the second sub-connecting portion 131 extending in opposite directions from edges of the rib plate 14 and both the first sub-connecting portion 130 and the second sub-connecting portion 131 being connected to the outer side surface of the longitudinal beam.

The first sub-connecting portion 130 is a component connecting the rib plate 14 and the outer side surface of the longitudinal beam. In some embodiments, the first sub-connecting portion 130 is plate-shaped, and its surface facing away from the rib plate 14 can be connected to the outer side surface of the longitudinal beam by welding, threaded connection, or other connection methods. The second sub-connecting portion 131 is a component connecting the rib plate 14 and the outer side surface of the longitudinal beam. In some embodiments, the second sub-connecting portion 131 is plate-shaped, and its surface facing away from the rib plate 14 can be connected to the outer side surface of the longitudinal beam by welding, threaded connection, or other connection methods.

"The first sub-connecting portion 130 and the second sub-connecting portion 131 extending in opposite directions from edges of the rib plate 14" can be understood as, along a thickness direction of the rib plate 14, or along the longitudinal direction y of the frame, the first sub-connecting portion 130 and the second sub-connecting portion 131 being located on opposite sides of the rib plate 14.

In some embodiments, the number of first sub-connecting portions 130 may be one, and in some other embodiments, the number of first sub-connecting portions 130 may be multiple, with multiple first sub-connecting portions 130 spaced apart along the gravity direction z. In some embodiments, the number of second sub-connecting portions 131 may be one, and in some other embodiments, the number of second sub-connecting portions 131 may be multiple, with multiple second sub-connecting portions 131 spaced apart along the gravity direction z. In some embodiments, the number of first sub-connecting portions 130 is multiple, with multiple first sub-connecting portions 130 spaced apart along the gravity direction z, and the number of second sub-connecting portions 131 is multiple, with multiple second sub-connecting portions 131 spaced apart along the gravity direction z, the first sub-connecting portions 130 and the second sub-connecting portions 131 being offset.

In some embodiments, referring to FIG. 9, the mounting unit 11 may further include a reinforcement piece 17, the reinforcement piece 17 including a first portion 170, a second portion 171, and a third portion 172, the first portion 170 being connected to a top surface of the longitudinal beam, ends of the second portion 171 and the third portion 172 being connected to the first portion 170, the second portion 171 and the third portion 172 being oppositely disposed along the longitudinal direction y of the frame, an avoidance gap being formed between the second portion 171 and the third portion 172, and the avoidance gap being capable of accommodating the rib plate 14 to enable the second portion 171 and the third portion 172 to be located on opposite sides of the rib plate 14. The second portion 171 can contact the first sub-connecting portion 130, that is, the first sub-connecting portion 130 is located between the second portion 171 and the longitudinal beam, and the third portion 172 can contact the second sub-connecting portion 131, that is, the second sub-connecting portion 131 is located between the third portion 172 and the longitudinal beam. In some embodiments, the first portion 170 is fixed to the top surface of the longitudinal beam by threaded members, the second portion 171 is connected to the outer side surface of the longitudinal beam through threaded members passing through the first sub-connecting portion 130, and the third portion 172 is connected to the outer side surface of the longitudinal beam through threaded members passing through the second sub-connecting portion 131.

In the above solution, by providing the first sub-connecting portion 130 and the second sub-connecting portion 131, and disposing the first sub-connecting portion 130 and the second sub-connecting portion 131 on opposite sides of the rib plate 14, the connection stability between the connecting portion 13 and the longitudinal beam can be effectively improved, thereby effectively enhancing the structural stability among the connecting portion 13, the rib plate 14, and the mounting beam 12, effectively reducing the risk of battery 2000 detachment, and improving the driving reliability of the vehicle body 1000.

According to some embodiments of this application, referring to FIG. 7, the bracket 10 includes multiple mounting units 11, the multiple mounting units 11 being spaced apart along the longitudinal direction y of the frame. The bracket 10 further includes a connecting beam 15, the connecting beam 15 extending along the longitudinal direction y of the frame and the connecting beam 15 connecting two adjacent mounting units 11.

Referring to FIG. 7, multiple mounting units 11 are spaced apart along the longitudinal direction y of the frame. In some embodiments, the battery 2000 may be located between two adjacent mounting units 11. In some embodiments, the number of mounting units 11 may be two, three, or four, and the like. Referring to FIG. 7, the number of mounting units 11 is four. In some embodiments, the gaps between two adjacent mounting units 11 may be equal or unequal.

Referring to FIG. 7, the bracket 10 further includes a connecting beam 15, the connecting beam 15 being a beam structure, the connecting beam 15 connecting two adjacent mounting units 11, and its function including improving the structural stability of the two mounting units 11.

In some embodiments, the connecting beam 15 may be plate-shaped, tubular, or rod-shaped. In some embodiments, the connecting beam 15 may connect two adjacent mounting units 11 by bonding, welding, riveting, or threaded connection.

In some embodiments, the connecting beam 15 may be connected to two ends of two adjacent mounting beams 12. In some embodiments, the connecting beam 15 may be connected to two ends of two adjacent rib plates 14. In some embodiments, the connecting beam 15 may be connected to two ends of two adjacent connecting portions 13. In some embodiments, the number of connecting beams 15 may be multiple, with some connecting beams 15 connected to two ends of two adjacent rib plates 14, some connecting beams 15 connected to two ends of two adjacent rib plates 14, and some connecting beams 15 connected to two ends of two adjacent connecting portions 13.

In the above solution, on the one hand, by providing multiple mounting units 11, multiple batteries 2000 can be supported, achieving the purpose of on-demand battery swapping and reducing battery swapping costs. On the other hand, by providing the connecting beam 15 to connect two adjacent mounting units 11, the structural stability between the two adjacent mounting units 11 can be effectively improved, enhancing the battery support capacity, reducing the risk of battery 2000 detachment, and improving the driving reliability of the vehicle body 1000.

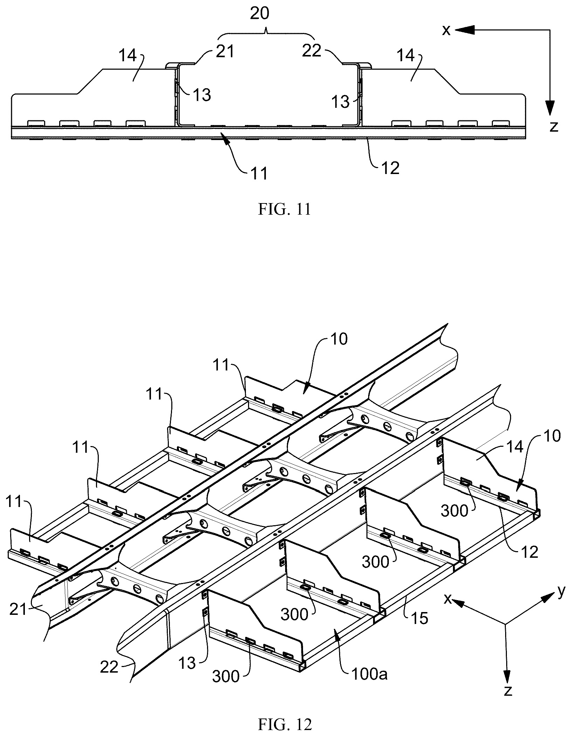

According to some embodiments of this application, referring to FIG. 10 and FIG. 11, FIG. 11 is a front view of a mounting unit 11 and a longitudinal beam in some embodiments of this application.

Each mounting unit 11 includes two connecting portions 13, the two connecting portions 13 being spaced apart along the lateral direction x of the frame, the pair of longitudinal beams being located between the two connecting portions 13, and each connecting portion 13 being connected to an outer side surface of a corresponding longitudinal beam.

The lateral direction x of the frame may be the arrangement direction of a pair of longitudinal beams. In some embodiments, the pair of longitudinal beams includes a first longitudinal beam 21 and a second longitudinal beam 22. Each mounting unit 11 includes two connecting portions 13, corresponding to the two longitudinal beams, that is, corresponding to the first longitudinal beam 21 and the second longitudinal beam 22. One connecting portion 13 is connected to the outer side surface of the first longitudinal beam 21, and the other connecting portion 13 is connected to the outer side surface of the second longitudinal beam 22.

Referring to FIG. 11, a portion of the mounting beam 12 may be located between the pair of longitudinal beams, and the remaining portion of the mounting beam 12 may be located on both sides of the pair of longitudinal beams (for example, a portion of the mounting beam 12 extends beyond the first longitudinal beam 21, and a portion of the mounting beam 12 extends beyond the second longitudinal beam 22). In some embodiments, the portion of the mounting beam 12 located between the pair of longitudinal beams may be provided with at least one first mounting portion 300. The portion of the mounting beam 12 extending beyond the first longitudinal beam 21 may be provided with at least one first mounting portion 300. The portion of the mounting beam 12 extending beyond the second longitudinal beam 22 may be provided with at least one first mounting portion 300.

In the above solution, by providing two connecting portions 13, on the one hand, each connecting portion 13 can connect to the outer side surface of a corresponding longitudinal beam, that is, the two longitudinal beams of the frame 20 are respectively connected by corresponding connecting portions 13, ensuring a stable connection relationship between the mounting unit 11 and the frame 20 and reducing the risk of battery 2000 detachment and improving the driving reliability of the vehicle 10000; on the other hand, since two connecting portions 13 are provided and spaced apart along the lateral direction x of the frame, the mounting beam 12 can be provided with more first mounting portions 300 to support larger-sized batteries 2000, thereby effectively increasing the driving range of the vehicle 10000.

According to some embodiments of this application, referring to FIG. 7, the bracket 10 includes multiple mounting units 11, the multiple mounting units 11 being spaced apart along the longitudinal direction y of the frame, an accommodation space being formed between two adjacent mounting units 11, and each accommodation space being configured to accommodate one battery 2000.

In some embodiments, multiple mounting units 11 are spaced apart along the longitudinal direction y of the frame, and an accommodation space 100a can be formed between two adjacent mounting units 11.

In some embodiments, two mounting units 11 are spaced apart along the longitudinal direction y of the frame, and a space capable of accommodating one battery 2000 can be formed between these two mounting units 11, with the remaining batteries 2000 being disposed on the side of one mounting unit 11 facing away from the other mounting unit 11.

In some embodiments, the number of mounting units 11 may be at least three to form at least two accommodation spaces 100a arranged along the longitudinal direction y of the frame. Each accommodation space 100a is independent of each other. Each accommodation space 100a can be configured to accommodate one battery 2000, and the battery 2000 located in the accommodation space 100a can be connected by a group of first mounting portions 300 in the accommodation space 100a.

In the above solution, by spacing multiple mounting units 11 along the longitudinal direction y of the frame to form multiple accommodation spaces 100a arranged along the longitudinal direction y of the frame, each battery 2000 can be orderly installed in a corresponding accommodation space 100a, with batteries 2000 not interfering with each other, thereby improving the battery swapping efficiency of the vehicle body 1000.

According to some other embodiments of this application, referring to FIG. 12, FIG. 12 is a schematic diagram of a bracket 10 and a frame 20 in some other embodiments of this application.

Each mounting unit 11 includes one connecting portion 13. The number of brackets 10 is two, and along the lateral direction x of the frame, the pair of longitudinal beams is located between the two brackets 10.

In some embodiments, "each mounting unit 11 includes one connecting portion 13" can be understood as the mounting unit 11 including one mounting beam 12 and one connecting portion 13. The mounting beam 12 may be located outside the longitudinal beam, and the connecting portion 13 is located outside the longitudinal beam and connected to the outer side surface of the longitudinal beam. The mounting beam 12 is connected to the connecting portion 13. One bracket 10 may be located on one side of the frame 20, that is, when the number of brackets 10 in the vehicle body 1000 is one, this one bracket 10 may be disposed on one side of the frame 20.

"The number of brackets 10 is two, and along the lateral direction x of the frame, the pair of longitudinal beams is located between the two brackets 10" can be understood as the number of brackets 10 being two, with the two brackets 10 respectively located on both sides of the frame 20, one bracket 10 being connected to one longitudinal beam of the frame 20, and the other bracket 10 being connected to the other longitudinal beam of the frame 20.

In the above solution, on the one hand, the mounting unit 11 has a simple structure and is easy to manufacture. The mounting unit 11, through one connecting portion 13, enables the mounting beam 12 to be stably connected to the outer side surface of one of the longitudinal beams, that is, one bracket 10 can be stably positioned outside one of the longitudinal beams of the frame 20. On the other hand, by providing brackets 10 on both sides of the frame 20, more batteries 2000 can be supported, increasing the upper limit of the number of batteries 2000 for swapping, thereby improving the driving range of the vehicle 10000.

According to some other embodiments of this application, referring to FIG. 12, the bracket 10 includes multiple mounting units 11, the multiple mounting units 11 being spaced apart along the longitudinal direction y of the frame and a space being formed between two adjacent mounting units 11 for accommodating a battery 2000.

Along the longitudinal direction y of the frame, the bracket 10 includes multiple mounting units 11, with the mounting beams 12 of the multiple mounting units 11 being spaced apart and each mounting beam 12 being connected to a corresponding connecting portion 13. Two adjacent mounting units 11 are spaced apart to form a space capable of accommodating a portion of the battery 2000, for example, along the longitudinal direction y of the frame, a projection of the battery 2000 can overlap with a projection of the mounting beam 12 and/or the connecting portion 13.

In some embodiments, the bracket 10 may include two, three, or four mounting units 11, and the like. Referring to FIG. 12, four mounting units 11 are spaced apart to form three spaces.

In some embodiments, the battery 2000 may be elongated or rectangular. The battery 2000 may extend along the longitudinal direction y of the frame, and one battery 2000 may be supported by one bracket 10. Referring to FIG. 12, two brackets 10 are provided on both sides of the frame 20, so two batteries 2000 can be supported, with the two batteries 2000 arranged along the lateral direction x of the frame.

In the above solution, along the longitudinal direction y of the frame, the bracket 10 providing multiple mounting units 11 can form multiple spaces to accommodate batteries 2000, reducing the risk of space wastage due to batteries 2000 occupying external space. In some embodiments, when batteries 2000 are arranged along the longitudinal direction y of the frame, multiple batteries 2000 can be arranged along the lateral direction x of the frame, and the spaces formed by multiple mounting units 11 in one frame 20 can collectively accommodate at least one row of batteries 2000. In some embodiments, when batteries 2000 are arranged along the lateral direction x of the frame, a battery 2000 can be supported by two frames 20.

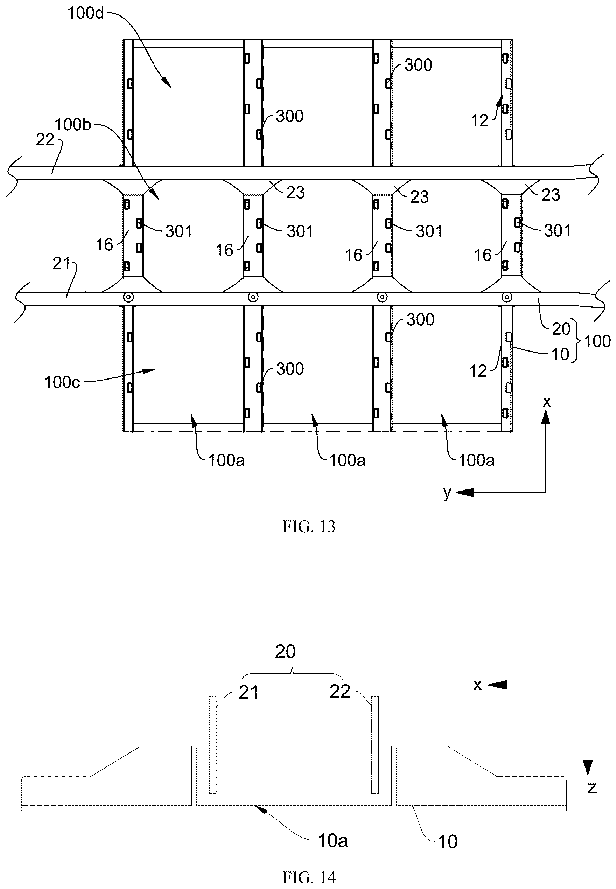

According to some other embodiments of this application, referring to FIG. 13, FIG. 13 is a bottom view of a frame 20 and a bracket 10 in some other embodiments of this application. The frame 20 further includes a crossbeam 23, the crossbeam 23 being connected between the pair of longitudinal beams; and the crossbeam 23 is provided with a second mounting portion 301, the second mounting portion 301 being detachably connected to the battery 2000.

In some embodiments, the pair of longitudinal beams includes a first longitudinal beam 21 and a second longitudinal beam 22, the first longitudinal beam 21 and the second longitudinal beam 22 being spaced apart relatively, the crossbeam 23 being located in the gap formed by the spacing between the pair of longitudinal beams, and the crossbeam 23 connecting the first longitudinal beam 21 and the second longitudinal beam 22. The crossbeam 23 can improve the structural strength of the frame 20, enabling the frame 20 to effectively bear various loads inside and outside the vehicle body 1000.

The second mounting portion 301 is a component provided on the crossbeam 23 configured to detachably connect with the battery 2000. In some embodiments, the second mounting portions 301 include, but are not limited to, mounting holes, mounting threaded members, and other structures capable of achieving detachable connection with the battery 2000. In some embodiments, the second mounting portions 301 may have the same structure as the first mounting portions 300.

In some embodiments, the frame 20 may have multiple crossbeams 23. The multiple crossbeams 23 can be provided with multiple groups of second mounting portions 301, the number of groups of second mounting portions 301 corresponding to the number of groups of first mounting portions 300, enabling each battery 2000 to be connected by a group of first mounting portions 300 and a group of second mounting portions 301.

In the above solution, by providing second mounting portions 301 on the crossbeam 23, mounting points are established between the battery 2000 and the crossbeam 23, improving the connection stability between the battery 2000 and the vehicle body 1000 and reducing the risk of detachment of the battery 2000. In some embodiments, when batteries 2000 are arranged along the longitudinal direction y of the frame, multiple batteries 2000 can be arranged along the lateral direction x of the frame, and by providing second mounting portions 301 on the crossbeam 23, the position corresponding to the crossbeam 23 can support at least one row of batteries 2000. In some embodiments, when batteries 2000 are arranged along the lateral direction x of the frame, the batteries 2000 can be supported by the first mounting portions 300 on two frames 20 and the mounting portions on the crossbeam 23.

According to some other embodiments of this application, referring to FIG. 13, the bracket assembly 100 further includes a reinforcement plate 16, the reinforcement plate 16 being connected to the crossbeam 23 and the reinforcement plate 16 being provided with through-holes corresponding to the second mounting portions 301.

In some embodiments, the reinforcement plate 16 may be plate-shaped, and the reinforcement plate 16 may be provided on the surface of the crossbeam 23 facing the ground, that is, the reinforcement plate 16 may be provided on the lower surface of the crossbeam 23. The reinforcement plate 16 is provided with through-holes to avoid the second mounting portions 301 on the crossbeam 23.

In some embodiments, along the lateral direction x of the frame, opposite ends of the reinforcement plate 16 may be respectively connected to the pair of longitudinal beams of the frame 20.

In the above solution, by providing the reinforcement plate 16, the structural strength of the crossbeam 23 can be effectively improved, reducing the risk of damage to the crossbeam 23 due to supporting the battery 2000, and enhancing the connection stability between the crossbeam 23 and the battery 2000.

According to some embodiments of this application, referring to FIG. 10, the mounting beam 12 is a square tube.

In some embodiments, the square tube may be a tubular structure with an internal cavity. In some embodiments, the square tube may be square steel.

In the above solution, by configuring the mounting beam 12 as a square tube, on the one hand, the material cost is low; on the other hand, the material has high structural strength, enabling effective support of the battery 2000 and reducing the risk of battery 2000 detachment.

According to some embodiments of this application, referring to FIG. 4, along the lateral direction x of the frame, a projection of the bracket 10 at least partially overlaps with a projection of the frame 20.

The lateral direction x of the frame may be the arrangement direction of a pair of longitudinal beams in the frame 20, and the lateral direction x of the frame may also be the width direction of the vehicle 10000. "A projection of the bracket 10 at least partially overlaps with a projection of the frame 20 along the lateral direction x of the frame" can be understood as, in the height direction (that is, the gravity direction z), the bracket 10 utilizes the space occupied by the frame 20. Alternatively, it can be understood as, among brackets 10 of the same specification, by raising the bracket 10 upward so that the projection of the bracket 10 in the lateral direction x of the frame falls on the frame 20, the ground clearance of the bracket 10 can be increased.

In the above solution, the lateral direction x of the frame may be perpendicular to the driving direction of the vehicle body 1000. By configuring the projection of the bracket 10 to at least partially overlap with the projection of the frame 20, the ground clearance of the bracket 10 can be effectively increased, reducing the impact of bracket installation on the ground clearance of the vehicle body 1000, thereby improving the driving reliability of the vehicle body 1000.

According to some embodiments of this application, referring to FIG. 14, FIG. 14 is a front view of a bracket 10 and a frame 20 in some embodiments of this application. The bracket 10 has an upwardly open avoidance slot 10a, at least a portion of the frame 20 being accommodated in the avoidance slot 10a.

In some embodiments, "upwardly open" may mean that, when the vehicle body 1000 is on the ground, the bracket 10 can be installed from below the frame 20.

In some embodiments, the bracket 10 has an avoidance slot 10a, the avoidance slot 10a being configured to accommodate at least a portion of the frame 20, for example, the avoidance slot 10a being configured to accommodate a pair of longitudinal beams of the frame 20 (for example, the first longitudinal beam 21 and the second longitudinal beam 22), that is, to avoid the pair of longitudinal beams, enabling the longitudinal beams to extend through the bracket 10 in the longitudinal direction y of the frame.

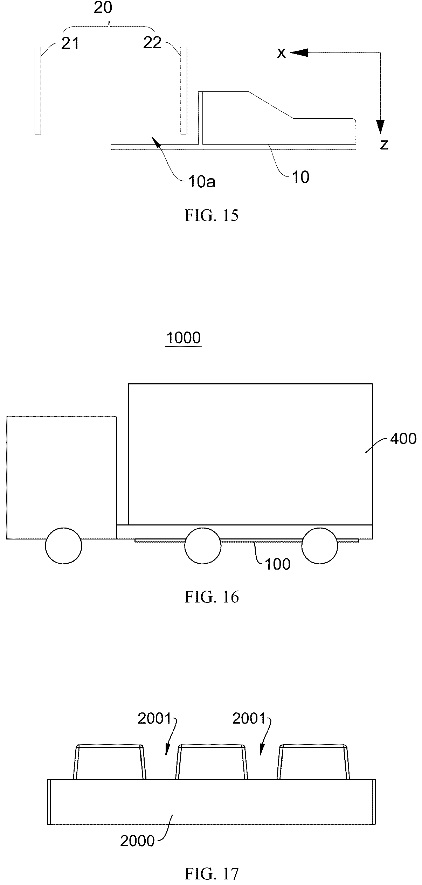

In some other embodiments, referring to FIG. 15, FIG. 15 is a front view of a bracket 10 and a frame 20 in some other embodiments of this application. In FIG. 15, the avoidance slot 10a may be configured to accommodate one longitudinal beam of the frame 20 (for example, the first longitudinal beam 21 or the second longitudinal beam 22), that is, to avoid one longitudinal beam, enabling the one longitudinal beam to extend through the bracket 10 in the longitudinal direction y of the frame.

"At least a portion of the frame 20 being accommodated in the avoidance slot 10a" can also be understood as, in the height direction, a portion of the bracket 10 being able to utilize the space occupied by the frame 20.

In the above solution, by providing an avoidance slot 10a on the bracket 10, at least a portion of the frame 20 can be avoided, making reasonable use of the space occupied by the at least a portion of the frame 20, thereby reducing the impact of the bracket provision on the ground clearance of the vehicle body 1000.

According to some embodiments of this application, the frame 20 is connected to a bottom wall and/or a side wall of the avoidance slot 10a.

In some embodiments, the frame 20 may be connected to the bottom wall of the avoidance slot 10a, and the frame 20 may be connected to the bottom wall of the avoidance slot 10a by welding, riveting, threaded connection, or other connection methods. In some embodiments, the frame 20 may be connected to the side wall of the avoidance slot 10a, and the frame 20 may be connected to the side wall of the avoidance slot 10a by welding, riveting, threaded connection, or other connection methods. In some embodiments, the frame 20 may be connected to both the side wall and the bottom wall of the avoidance slot 10a.

In the above solution, since at least a portion of the frame 20 is accommodated in the avoidance slot 10a, the frame 20 can be connected to the bottom wall and/or the side wall of the avoidance slot 10a, making reasonable use of the avoidance slot 10a, which not only avoids the bracket 10 but also enables the connection between the bracket 10 and the frame 20, simplifying the connection structure between the bracket 10 and the frame 20, reducing installation difficulty, and lowering installation costs.

According to some embodiments of this application, referring to FIG. 2, the first connector 200 is mounted on the bracket assembly 100.

In some embodiments, the first connector 200 may be mounted on the bracket assembly 100 by bonding, welding, riveting, or threaded connection. Alternatively, the first connector 200 may be mounted on the bracket assembly 100 by strapping members.

In the above solution, by mounting the first connector 200 on the bracket assembly 100, the first connector 200 and the second connector can be connected simultaneously when the battery 2000 is mounted on the bracket assembly 100, improving battery swapping efficiency.

In some other embodiments, the first connector 200 may be mounted on other parts of the vehicle body 1000.

According to some embodiments of this application, referring to FIG. 16, FIG. 16 is a schematic diagram of a vehicle body 1000 in some embodiments of this application. The vehicle body 1000 includes a cargo compartment 400, the bracket assembly 100 being located below the cargo compartment 400.

The vehicle body 1000 is applied to a truck, and the truck may include a cargo compartment 400, the cargo compartment 400 being configured to carry goods. The bracket assembly 100 is disposed below the cargo compartment 400, capable of supporting the load of the cargo compartment 400 and the goods within the cargo compartment 400.

"The bracket assembly 100 being located below the cargo compartment 400" can also be understood as the battery 2000 being located below the cargo compartment 400.

In the above solution, the vehicle body 1000 may be a vehicle body for freight purposes, which may include a cargo compartment for carrying goods, for example, the vehicle body 1000 may be a vehicle body for a heavy truck. By disposing the bracket assembly 100 below the cargo compartment, the space below the cargo compartment can be reasonably utilized, and compared to the current backpack-style battery swapping for heavy trucks (where the battery 2000 is mounted on the back of the cab), this changes the positional layout of the battery 2000 in the vehicle body 1000, effectively saving space in the longitudinal direction of the vehicle 10000, reducing the occupation of the space where the cargo compartment is located, and increasing the cargo capacity of the vehicle 10000.

According to some embodiments of this application, this application further provides a vehicle 10000, the vehicle 10000 including the vehicle body 1000 described above and at least one battery 2000. Each battery 2000 is detachably connected to a group of the first mounting portions 300, and a second connector of each battery 2000 is connected to one first connector 200.

In the above solution, a vehicle 10000 is provided, where the vehicle body 1000 in the vehicle 10000 can perform on-demand battery swapping, that is, adjusting the number of batteries 2000 to be swapped based on its own driving range requirements, thereby achieving the purpose of reducing battery swapping costs.

According to some embodiments of this application, referring to FIG. 3 and FIG. 17, FIG. 17 is a schematic diagram of a battery 2000 in some embodiments of this application. The battery 2000 has an avoidance space 2001 for avoiding the bracket assembly 100.

The avoidance space 2001 may be a recessed portion of the battery 2000 configured to avoid the bracket assembly 100. Referring to FIG. 3 and FIG. 17, in the height direction, the upper surface of the battery 2000 may be a concave-convex surface, with the recessed portion forming the avoidance space 2001.

In some embodiments, the bracket assembly 100 includes the frame 20, and the avoidance space 2001 can avoid a pair of longitudinal beams of the frame 20, that is, the protruding portion of the upper surface of the battery 2000 can utilize the space occupied by the frame 20.

In the above solution, by providing an avoidance space 2001 on the battery 2000, the space occupied by the bracket assembly 100 can be reasonably utilized, increasing the capacity of the battery 2000 and providing a longer driving range for the vehicle 10000.

According to some embodiments of this application, referring to FIG. 3, the bracket assembly 100 includes the frame 20; and along the lateral direction x of the frame, a projection of the battery 2000 at least partially overlaps with a projection of the frame 20.

The lateral direction x of the frame may be the arrangement direction of the pair of longitudinal beams in the frame 20, and may also be the width direction of the vehicle 10000. "A projection of the battery 2000 at least partially overlaps with a projection of the frame 20 along the lateral direction x of the frame" can be understood as, in the height direction, the battery 2000 having an upwardly protruding portion, the projection of the protruding portion in the lateral direction x of the frame falling on the frame 20. "A projection of the battery 2000 at least partially overlaps with a projection of the frame 20 along the lateral direction x of the frame" can also be understood as, in the height direction, the battery 2000 being able to utilize the space occupied by the frame 20.

In the above solution, the lateral direction x of the frame may be perpendicular to the driving direction of the vehicle 10000, and may also be understood as the width direction of the vehicle 10000. Along the lateral direction x of the frame, by configuring the projection of the battery 2000 to at least partially overlap with the projection of the frame 20, the battery 2000 can make reasonable use of the height space of the vehicle body 1000, increasing the capacity of the battery 2000 and providing a longer driving range for the vehicle 10000.

According to some embodiments of this application, the bracket assembly 100 includes the frame 20; the battery 2000 includes a casing and multiple battery cells disposed within the casing, and along the lateral direction x of the frame, a projection of at least a portion of the battery cells overlaps with a projection of the frame 20.

The battery 2000 may include a casing and battery cells. The volume of the battery cells affects the capacity of the battery 2000.

"A projection of at least a portion of the battery cells overlaps with a projection of the frame 20 along the lateral direction x of the frame" can be understood as, in the height direction, at least a portion of the battery cells being able to utilize the space occupied by the frame 20.

In the above solution, the lateral direction x of the frame may be perpendicular to the driving direction of the vehicle 10000, and may also be understood as the width direction of the vehicle 10000. Along the lateral direction x of the frame, by configuring at least a portion of the battery cells to have a projection that at least partially overlaps with the projection of the frame 20, the at least a portion of the battery cells can make reasonable use of the height space of the vehicle body 1000, increasing the capacity of the battery 2000 and providing a longer driving range for the vehicle 10000.

According to some embodiments of this application, a lowest point of the battery 2000 is lower than a lowest point of the bracket 10.

In some embodiments, the lowest point of the battery 2000 can be understood as the part of the battery 2000 closest to the ground. The lowest point of the bracket 10 can be understood as the part of the bracket 10 closest to the ground.

In the above solution, by configuring the lowest point of the battery 2000 to be lower than the lowest point of the bracket 10, the battery 2000 can make reasonable use of the height space of the vehicle body 1000, increasing the capacity of the battery 2000 and providing a longer driving range for the vehicle 10000.

According to some embodiments of this application, the vehicle 10000 is a heavy truck.

In some embodiments, a heavy truck may be a heavy-duty truck, which requires different battery 2000 capacities when transporting different goods or traveling different routes (for example, one battery 2000 for short-range requirements, two batteries 2000 for medium-range requirements, and three batteries 2000 for long-range requirements). Through the vehicle body 1000 provided above, on-demand battery swapping can be achieved (for example, for short-range requirements, only one battery 2000 is swapped, that is, one battery 2000 is mounted; for medium-range requirements, only two batteries 2000 are swapped, that is, two batteries 2000 are mounted; for long-range requirements, three batteries 2000 are swapped, that is, three batteries 2000 are mounted), thereby saving the costs of additional batteries 2000 and effectively reducing battery swapping costs.

According to some embodiments of this application, a vehicle body 1000 is provided, referring to FIG. 1 to FIG. 16.

The vehicle body 1000 may be applied to a heavy truck, that is, a heavy-duty truck. Heavy-duty trucks require different battery 2000 capacities when transporting different goods or traveling different routes, for example, for short-range requirements, a battery 2000 with a capacity of 200 kWh is needed (for example, one battery 2000), for medium-range requirements, a battery 2000 with a capacity of 400 kWh is needed (for example, two batteries 2000), and for long-range requirements, a battery 2000 with a capacity of 600 kWh is needed (for example, three batteries 2000). To save battery swapping costs, the vehicle body 1000 may include a bracket assembly 100 and multiple first connectors 200. The first connector 200 may be a structure connected to the second connector of the battery 2000, and the first connector 200 may be a high-low voltage connector or/and a liquid-cooling connector.

The bracket assembly 100 includes a frame 20 and a bracket 10, the frame 20 may be the main beam of a heavy truck, the frame 20 may include a first longitudinal beam 21 and a second longitudinal beam 22, the first longitudinal beam 21 and the second longitudinal beam 22 being spaced apart along the lateral direction x of the frame, and the first longitudinal beam 21 and the second longitudinal beam 22 extending along the longitudinal direction y of the frame. The bracket 10 is provided on the first longitudinal beam 21 and the second longitudinal beam 22, the bracket 10 being provided with multiple groups of first mounting portions 300, each group of first mounting portions 300 being configured to detachably connect one battery 2000, the number of first connectors 200 being equal to the number of groups of first mounting portions 300, and each first connector 200 being configured to connect with a second connector of one battery 2000. In some embodiments, the bracket 10 is provided with three groups of first mounting portions 300. The number of first connectors 200 may be three.

Referring to FIG. 2, the bracket 10 has three accommodation spaces 100a, the three accommodation spaces 100a being arranged along a first direction, each accommodation space 100a being configured to accommodate one battery 2000, and each accommodation space 100a being correspondingly provided with a group of first mounting portions 300. Each accommodation space 100a is divided by the first longitudinal beam 21 and the second longitudinal beam 22 into a first subspace 100b, a second subspace 100c, and a third subspace 100d, the first subspace 100b being located between the first longitudinal beam 21 and the second longitudinal beam 22, the second subspace 100c being located on a side of the first longitudinal beam 21 facing away from the second longitudinal beam 22, and the third subspace 100d being located on a side of the second longitudinal beam 22 facing away from the first longitudinal beam 21. One battery 2000 can be accommodated by the first subspace 100b, the second subspace 100c, and the third subspace 100d, respectively, to be uniformly supported on the bracket 10.

Referring to FIG. 7 and FIG. 8, the bracket 10 includes multiple mounting units 11, the multiple mounting units 11 being spaced apart along the first direction and a space being formed between two adjacent mounting units 11 to form an accommodation space 100a. The mounting unit 11 includes a mounting beam 12, a connecting portion 13, and a rib plate 14. The mounting beam 12 extends along the lateral direction x of the frame, a portion of the mounting beam 12 being located between the first longitudinal beam 21 and the second longitudinal beam 22, a portion of the mounting beam 12 extending beyond the first longitudinal beam 21, and a portion of the mounting beam 12 extending beyond the second longitudinal beam 22. The mounting beam 12 is provided with multiple first mounting portions 300. Two adjacent mounting units 11 can support one battery 2000. In some embodiments, a group of first mounting portions 300 may be provided on the mounting beams 12 of two adjacent mounting units 11. Each mounting unit 11 includes two connecting portions 13, the two connecting portions 13 being spaced apart along the lateral direction x of the frame, the pair of longitudinal beams being located between the two connecting portions 13, and each connecting portion 13 being connected to an outer side surface of a corresponding longitudinal beam. Each mounting unit 11 includes two rib plates 14, corresponding to the connecting portions 13. The rib plate 14 is provided between the corresponding connecting portion 13 and the mounting beam 12.

In the above solution, by providing multiple first connectors 200 and multiple groups of first mounting portions 300 on the bracket 10, the number of batteries 2000 to be replaced can be adjusted based on driving range requirements (that is, on-demand battery swapping), for example, for short-range requirements, only one battery 2000 is swapped, that is, one battery 2000 is mounted; for medium-range requirements, only two batteries 2000 are swapped, that is, two batteries 2000 are mounted; for long-range requirements, three batteries 2000 are swapped, that is, three batteries 2000 are mounted, thereby saving the costs of additional batteries 2000 and effectively reducing battery swapping costs.

The above description is only of the preferred embodiments of this application and is not intended to limit this application. For those skilled in the art, this application may have various modifications and changes. Any modifications, equivalent substitutions, improvements, and the like, made within the spirit and principles of this application shall be included within the scope of protection of this application.

## Claims

1. A vehicle body comprising:
a bracket assembly, the bracket assembly being provided with multiple groups of first mounting portions and each group of the first mounting portions being configured to detachably connect one battery; and
multiple first connectors, the number of the first connectors being equal to the number of groups of the first mounting portions, and each first connector being configured to connect with a second connector of one battery.

2. The vehicle body according to claim 1, wherein the bracket assembly comprises a frame.

3. The vehicle body according to claim 2, wherein the bracket assembly further comprises a bracket, the bracket being fixedly connected to the frame and the bracket being provided with the first mounting portions.

4. The vehicle body according to claim 3, wherein the frame comprises a first longitudinal beam and a second longitudinal beam, a highest point of the bracket being not higher than an upper end surface of the first longitudinal beam, and the highest point of the bracket being not higher than an upper end surface of the second longitudinal beam.

5. The vehicle body according to claim 3 or 4, wherein the frame comprises the first longitudinal beam and the second longitudinal beam, the bracket being fixedly connected to the first longitudinal beam and/or the second longitudinal beam.

6. The vehicle body according to claim 5, wherein in a direction from the first longitudinal beam to the second longitudinal beam, the bracket extends beyond the second longitudinal beam.

7. The vehicle body according to claim 6, wherein a portion of the bracket extending beyond the second longitudinal beam is provided with at least one first mounting portion.

8. The vehicle body according to any one of claims 5 to 7, wherein in a direction from the second longitudinal beam to the first longitudinal beam, the bracket extends beyond the first longitudinal beam.

9. The vehicle body according to claim 8, wherein a portion of the bracket extending beyond the first longitudinal beam is provided with at least one first mounting portion.

10. The vehicle body according to any one of claims 5 to 9, wherein at least a portion of the bracket is located between the first longitudinal beam and the second longitudinal beam.

11. The vehicle body according to claim 10, wherein the portion of the bracket located between the first longitudinal beam and the second longitudinal beam is provided with at least one first mounting portion.

12. The vehicle body according to any one of claims 3 to 11, wherein the frame is provided with a second mounting portion, the second mounting portion being configured to detachably connect a battery.

13. The vehicle body according to claim 12, wherein the frame comprises the first longitudinal beam and the second longitudinal beam, the second mounting portion being provided on the first longitudinal beam and/or the second longitudinal beam.

14. The vehicle body according to claim 12 or 13, wherein the frame comprises the first longitudinal beam, the second longitudinal beam, and a crossbeam, the crossbeam being connected between the first longitudinal beam and the second longitudinal beam, and the second mounting portion being provided on the crossbeam.

15. The vehicle body according to any one of claims 3 to 14, wherein the bracket assembly has multiple accommodation spaces, the multiple accommodation spaces being arranged along a first direction, each accommodation space being configured to accommodate one battery, and each accommodation space being correspondingly provided with a group of the first mounting portions.

16. The vehicle body according to claim 15, wherein the accommodation space has a downwardly open opening, the opening being configured to allow a battery to enter or exit the accommodation space.

17. The vehicle body according to claim 15 or 16, wherein the first direction is parallel to a longitudinal direction of the frame.

18. The vehicle body according to claim 17, wherein the frame comprises the first longitudinal beam and the second longitudinal beam, each accommodation space being divided by the first longitudinal beam and the second longitudinal beam into a first subspace, a second subspace, and a third subspace, the first subspace being located between the first longitudinal beam and the second longitudinal beam, the second subspace being located on a side of the first longitudinal beam facing away from the second longitudinal beam, and the third subspace being located on a side of the second longitudinal beam facing away from the first longitudinal beam.

19. The vehicle body according to claim 18, wherein the first subspace is correspondingly provided with at least one first mounting portion, the second subspace is correspondingly provided with at least one first mounting portion, and the third subspace is correspondingly provided with at least one first mounting portion.

20. The vehicle body according to claim 19, wherein at least two first mounting portions are provided in the first subspace, at least two first mounting portions are provided in the second subspace, and at least two first mounting portions are provided in the third subspace.

21. The vehicle body according to claim 20, wherein
at least two first mounting portions in the first subspace are respectively disposed on opposite sides of the first subspace along the longitudinal direction of the frame;
and/or, at least two first mounting portions in the second subspace are respectively disposed on opposite sides of the second subspace along the longitudinal direction of the frame;
and/or, at least two first mounting portions in the third subspace are respectively disposed on opposite sides of the third subspace along the longitudinal direction of the frame.

22. The vehicle body according to any one of claims 15 to 21, wherein the first direction is parallel to a lateral direction of the frame.

23. The vehicle body according to claim 22, wherein the frame comprises the first longitudinal beam and the second longitudinal beam, the number of accommodation spaces being at least two, at least one accommodation space being located on a side of the first longitudinal beam facing away from the second longitudinal beam, and at least one accommodation space being located on a side of the second longitudinal beam facing away from the first longitudinal beam.

24. The vehicle body according to claim 23, wherein the number of accommodation spaces is at least three, at least one accommodation space being located between the first longitudinal beam and the second longitudinal beam.

25. The vehicle body according to any one of claims 15 to 24, wherein the first mounting portion is provided at least one end of the accommodation space along the first direction.

26. The vehicle body according to claim 25, wherein the first mounting portions are provided at opposite ends of the accommodation space along the first direction.

27. The vehicle body according to claim 26, wherein the accommodation space has a first end and a second end opposite to each other along the first direction, the first mounting portion provided at the first end being offset from the first mounting portion provided at the second end.

28. The vehicle body according to claim 26 or 27, wherein the first mounting portions at two ends of two adjacent accommodation spaces that are close to each other are offset.

29. The vehicle body according to any one of claims 25 to 28, wherein a dimension of the accommodation space along the first direction is smaller than a dimension of the accommodation space along a second direction, the first direction, the second direction, and a gravity direction being mutually perpendicular.

30. The vehicle body according to any one of claims 3 to 29, wherein
the frame comprises a pair of longitudinal beams and the bracket comprises at least one mounting unit, each mounting unit comprising a mounting beam and a connecting portion and the mounting beam extending along the lateral direction of the frame;
along the lateral direction of the frame, the connecting portion is connected to an outer side surface of the longitudinal beam;
the mounting beam is connected to the connecting portion; and
the mounting beam is provided with the first mounting portion.

31. The vehicle body according to claim 30, wherein the connecting portion extends along the gravity direction.

32. The vehicle body according to claim 30 or 31, wherein the mounting unit further comprises a rib plate, along the lateral direction of the frame, the rib plate being located outside the frame and the rib plate connecting the connecting portion and the mounting beam.

33. The vehicle body according to claim 32, wherein the connecting portion comprises a first sub-connecting portion and a second sub-connecting portion, the first sub-connecting portion and the second sub-connecting portion extending in opposite directions from edges of the rib plate and both the first sub-connecting portion and the second sub-connecting portion being connected to the outer side surface of the longitudinal beam.

34. The vehicle body according to any one of claims 30 to 33, wherein the bracket comprises multiple mounting units, the multiple mounting units being spaced apart along the longitudinal direction of the frame, and the bracket further comprises a connecting beam, the connecting beam extending along the longitudinal direction of the frame and the connecting beam connecting two adjacent mounting units.

35. The vehicle body according to any one of claims 30 to 34, wherein each mounting unit comprises two connecting portions, the two connecting portions being spaced apart along the lateral direction of the frame, the pair of longitudinal beams being located between the two connecting portions, and each connecting portion being connected to an outer side surface of a corresponding longitudinal beam.

36. The vehicle body according to claim 35, wherein the bracket comprises multiple mounting units, the multiple mounting units being spaced apart along the longitudinal direction of the frame, an accommodation space being formed between two adjacent mounting units, and each accommodation space being configured to accommodate one battery.

37. The vehicle body according to any one of claims 30 to 36, wherein
each mounting unit comprises one connecting portion; and
the number of brackets is two, and along the lateral direction of the frame, the pair of longitudinal beams is located between the two brackets.

38. The vehicle body according to claim 37, wherein the bracket comprises multiple mounting units, the multiple mounting units being spaced apart along the longitudinal direction of the frame and a space being formed between two adjacent mounting units for accommodating a battery.

39. The vehicle body according to claim 37 or 38, wherein
the frame further comprises a crossbeam, the crossbeam being connected between the pair of longitudinal beams; and
the crossbeam is provided with a second mounting portion, the second mounting portion being detachably connected to the battery.

40. The vehicle body according to claim 39, wherein the bracket assembly further comprises a reinforcement plate, the reinforcement plate being connected to the crossbeam, and the reinforcement plate being provided with a through-hole corresponding to the second mounting portion.

41. The vehicle body according to any one of claims 30 to 40, wherein the mounting beam is a square tube.

42. The vehicle body according to any one of claims 3 to 41, wherein along the lateral direction of the frame, a projection of the bracket at least partially overlaps with a projection of the frame.

43. The vehicle body according to any one of claims 2 to 42, wherein the bracket has an upwardly open avoidance slot, at least a portion of the frame being accommodated in the avoidance slot.

44. The vehicle body according to claim 43, wherein the frame is connected to a bottom wall and/or a side wall of the avoidance slot.

45. The vehicle body according to any one of claims 1 to 44, wherein the first connector is mounted on the bracket assembly.

46. The vehicle body according to any one of claims 1 to 45, wherein the vehicle body comprises a cargo compartment, the bracket assembly being located below the cargo compartment.

47. A vehicle comprising:
the vehicle body according to any one of claims 1 to 46; and
at least one battery, each battery being detachably connected to a group of the first mounting portions and a second connector of each battery being connected to one first connector.

48. The vehicle according to claim 47, wherein the battery has an avoidance space for avoiding the bracket assembly.

49. The vehicle according to claim 47 or 48, wherein the bracket assembly comprises a frame, and along the lateral direction of the frame, a projection of the battery at least partially overlaps with a projection of the frame.

50. The vehicle according to any one of claims 47 to 49, wherein
the bracket assembly comprises the frame; and
the battery comprises a casing and multiple battery cells disposed within the casing, and along the lateral direction of the frame, a projection of at least a portion of the battery cells overlaps with a projection of the frame.

51. The vehicle according to any one of claims 47 to 50, wherein a lowest point of the battery is lower than a lowest point of the bracket assembly.

52. The vehicle according to any one of claims 47 to 51, wherein the vehicle is a heavy truck.
